# EUROPEAN PATENT APPLICATION

(11) **EP 4 648 309 A1**
(43) Date of publication of application: **12.11.2025**
(21) Application number: 24769707.1
(22) Date of filing: 07.02.2024
(51) Int. Cl.: H04B 10/2575

(54) **COMMUNICATION SYSTEM AND COMMUNICATION APPARATUS**

(30) Priority: 14.03.2023 CN 202310284651
(71) Applicant: Huawei Technologies Co., Ltd., Shenzhen, Guangdong 518129 (CN)
(72) Inventor: ZHANG, Jingwei, Shenzhen, Guangdong 518129 (CN); WANG, Su, Shenzhen, Guangdong 518129 (CN); DONG, Huaiyuan, Shenzhen, Guangdong 518129 (CN)
(74) Representative: MERH-IP Matias Erny Reichl Hoffmann Patentanwälte PartG mbB
(86) International application number: PCT/CN2024/076573
(87) International publication number: WO 2024/188011

(57) **Abstract**

This application discloses a communication system and a communication apparatus. In the communication system, an optical terminal includes at least one electrical port configured to connect to another optical terminal. When a first optical terminal is connected to at least one second optical terminal in series through an electrical port, the first optical terminal can send data of the second optical terminal to the at least one second optical terminal through the electrical port, and the second optical terminal can receive a data frame from the first optical terminal through an electrical port, to obtain the data that is of the second optical terminal and that is delivered by an optical head end. Because an electrical port-based connection manner has no optical signal attenuation problem caused by an optical port-based connection manner, a problem that a quantity of optical terminals is limited due to an optical path loss can be resolved. This helps expand a quantity of optical terminals that can be connected in the communication system, and further helps expand application of the communication system to an application scenario of massive nodes.

## Description

This application claims priority to Chinese Patent Application No. 202310284651.7, filed with the China National Intellectual Property Administration on March 14, 2023 and entitled "COMMUNICATION SYSTEM AND COMMUNICATION APPARATUS", which is incorporated herein by reference in its entirety.

### TECHNICAL FIELD

Embodiments of this application relate to the communication field, and in particular, to a communication system and a communication apparatus.

### BACKGROUND

A field bus (field bus) technology is a technology used for data communication and exchange between a control device and a field device in an industrial field. To meet increasingly high requirements on network bandwidth and high requirements on a delay and jitter in a current field-level industrial control network, researchers propose an industry optical bus (industry optical bus, IOB) technology that is based on optical communication. The industry optical bus technology is a bus technology implemented in the industrial network based on the optical communication. Generally, an optical bus network structure uses a passive optical distribution network (optical distribution network, ODN) for networking, and implements control of the control device on a plurality of field devices by using a multi-level optical splitting capability and a multi-terminal access capability of the optical distribution network. Specifically, the control device is connected to or integrated into an optical head end, the optical head end is connected to a plurality of optical terminals through the optical distribution network, and each optical terminal is connected to the field device or integrated into the field device, to implement control and management of the control device on the field devices.

However, an optical splitting function of a splitter not only causes a limited optical path, but also causes an optical path loss. Consequently, a quantity of optical terminals that can be connected to the optical head end is limited, and an application scenario of an optical bus system is limited.

### SUMMARY

This application provides a communication system and a communication apparatus, to increase a quantity of optical terminals that can be connected in an optical bus system, and expand an application scenario of the optical bus system.

According to a first aspect, this application provides a communication system. The communication system includes an optical head end, a first optical terminal, and n second optical terminals managed by the first optical terminal. The first optical terminal is connected to the optical head end through an optical port, the n second optical terminals are connected in series through electrical ports, the first optical terminal is connected, through an electrical port, to the n second optical terminals connected in series, and n is an integer greater than 0. Specifically, the optical head end is configured to send a data frame to the first optical terminal, where the data frame includes data of at least one of the n second optical terminals. The first optical terminal is configured to: obtain the data frame through the optical port, and send, through the electrical port, a data frame to a second optical terminal connected to the first optical terminal. Each of the at least one second optical terminal is configured to: receive a data frame from the first optical terminal or a previous-level second optical terminal through an electrical port, obtain data of the second optical terminal in the data frame, and send a data frame to a next-level second optical terminal connected to the second optical terminal.

In the communication system provided in this application, an optical terminal includes at least one electrical port configured to connect to another optical terminal. When the first optical terminal is connected to the at least one second optical terminal in series through the electrical port, the first optical terminal can send the data of the second optical terminal to the at least one second optical terminal through the electrical port, and the second optical terminal can receive the data frame from the first optical terminal through an electrical port, to obtain the data that is of the second optical terminal and that is delivered by the optical head end. Because an electrical port-based connection manner has no optical signal attenuation problem caused by an optical port-based connection manner, a problem that a quantity of optical terminals is limited due to an optical path loss can be resolved. This helps expand a quantity of optical terminals that can be connected in the communication system, and further helps expand application of the communication system to an application scenario of massive nodes.

In a possible implementation, the data frame includes a data processing field of the first optical terminal and a data processing field of each of the n second optical terminals. The first optical terminal is further configured to perform data exchange based on the data processing field corresponding to the first optical terminal in the data frame. Each of the n second optical terminals is specifically configured to perform data exchange based on the data processing field corresponding to the second optical terminal in a received data frame.

In this implementation, each optical terminal performs data exchange in the corresponding data processing field, and each optical terminal does not need to parse a data processing field corresponding to another optical terminal or parse the entire data frame. Therefore, this helps each optical terminal quickly write data into or read data from the data frame. Therefore, this helps improve efficiency of data exchange between the optical head end and the optical terminal, and further helps improve efficiency of data exchange between a control device and a field device. Therefore, this helps improve efficiency of data exchange between the optical head end and the optical terminal, and further helps improve efficiency of data exchange between a control device and a field device.

In a possible implementation, the second optical terminal is further configured to transparently transmit, to the first optical terminal through at least one second optical terminal, a data frame after data exchange. The first optical terminal is further configured to send, to the optical head end through the optical port, the data frame after data exchange.

For example, if the second optical terminal is an end node, the second optical terminal loops back and transparently transmits, to the first optical terminal, the data frame after data exchange, so that the first optical terminal reports, to the optical head end, the data frame after data exchange. Therefore, this helps quickly transmit, to the first optical terminal, the data frame after data exchange, and then transmit the data frame to the optical head end.

In a possible implementation, a frame header of the data frame includes a management identifier of each second optical terminal. The first optical terminal is specifically configured to send, based on a management identifier of the second optical terminal connected to the first optical terminal, a data frame to the second optical terminal in a cut-through manner. Each of the n second optical terminals is specifically configured to send, based on a management identifier of a next-level second optical terminal connected to the second optical terminal, a data frame to the next-level second optical terminal in a cut-through manner.

In this implementation, because the frame header of the data frame includes the management identifier of each second optical terminal, when receiving the frame header, the first optical terminal may determine a next hop for forwarding, that is, the data frame is forwarded between optical terminals in a cut-through manner. This helps improve data frame forwarding efficiency, and further helps reduce a network delay.

In a possible implementation, the frame header of the data frame further includes a management identifier of the first optical terminal.

In this implementation, that the frame header of the data frame may further include the management identifier of the first optical terminal is proposed, to distinguish between different first optical terminals when there are a plurality of first optical terminals in the communication system. For example, the optical head end distinguishes, by using the management identifier of the first optical terminal in the frame header, a first optical terminal from which the data frame comes. This helps the optical head end accurately distinguish between data frames from different first optical terminals, and further helps improve processing efficiency of the optical head end and improve communication efficiency of the communication system.

In a possible implementation, the frame header of the data frame further includes first indication information, and the first indication information indicates the first optical terminal to send a data frame to the second optical terminal connected to the first optical terminal.

In this implementation, the frame header may carry one piece of indication information to indicate the first optical terminal to forward the data frame to a next-level optical terminal connected in series. When the first optical terminal and an optical terminal in a conventional technology exist in the communication system, this helps the optical head end distinguish between a data frame (that is, the data frame provided in this application) from the first optical terminal and a data frame (that is, a data frame in the conventional technology) from the optical terminal in the conventional technology.

In a possible implementation, a data field of the data frame includes the management identifier of each second optical terminal, and the management identifier of each second optical terminal in the data field indicates a location that is of the data processing field corresponding to each second optical terminal and that is in the data field. Each of the n second optical terminals is specifically configured to determine, based on the management identifier of the second optical terminal in the data field, the location that is of the data processing field corresponding to the second optical terminal and that is in the data field.

In this implementation, that the second optical terminal can locate the data processing field of the second optical terminal by using the management identifier of the second optical terminal in the data field is proposed. This helps improve efficiency of performing data exchange by the second optical terminal, and further helps improve efficiency of data exchange between the second optical terminal and the optical head end.

In a possible implementation, the data field of the data frame further includes the management identifier of the first optical terminal, and the management identifier of the first optical terminal in the data field indicates a location that is of the data processing field corresponding to the first optical terminal and that is in the data field. The first optical terminal is specifically configured to determine, based on the management identifier of the first optical terminal in the data field, the location that is of the data processing field corresponding to the first optical terminal and that is in the data field.

In this implementation, that the first optical terminal can locate the data processing field of the first optical terminal by using the management identifier of the first optical terminal in the data field is proposed. This helps improve efficiency of performing data exchange by the first optical terminal, and further helps improve efficiency of data exchange between the first optical terminal and the optical head end.

In a possible implementation, the data field of the data frame further includes second indication information of each second optical terminal, and the second indication information indicates at least one data processing type of the data processing field corresponding to the second optical terminal and a length of a data processing field of each data processing type.

In a possible implementation, the data processing type includes read processing and/or write processing, and different data processing types correspond to different locations in the data processing field. The second optical terminal is specifically configured to write, based on the second indication information, data into a data processing field whose data processing type is read processing; and/or the second optical terminal is specifically configured to read, based on the second indication information, data from a data processing field whose data processing type is write processing.

In a possible implementation, the first optical terminal is further configured to: obtain information about the n second optical terminals, and register the first optical terminal and the n second optical terminals with the optical head end based on information about the first optical terminal and the information about the n second optical terminals. The optical head end is further configured to determine the management identifier of the first optical terminal and the management identifier of each of the n second optical terminals based on the information about the first optical terminal and the information about the n second optical terminals that are obtained from the first optical terminal.

In this implementation, that the first optical terminal is used as an agent to collect the information about the second optical terminals to register the second optical terminals with the optical head end is proposed. In comparison with a solution in the conventional technology in which each optical terminal connected to the optical head end is registered separately, this helps improve registration efficiency of the second optical terminals in the communication system, reduce signaling overheads consumed during registration, and save bandwidth resources.

In a possible implementation, the optical head end is further configured to send the management identifier of the first optical terminal and the management identifier of each of the n second optical terminals to the first optical terminal. The first optical terminal is further configured to broadcast the management identifiers of the n second optical terminals to the n second optical terminals.

In this implementation, the optical head end distributes the management identifiers of the second optical terminals to the plurality of second optical terminals through the first optical terminal. In comparison with a solution in the conventional technology in which the optical head end separately distributes a management identifier to each optical terminal, this helps reduce signaling overheads.

In a possible implementation, information about each second optical terminal includes bandwidth information of each second optical terminal and a physical address of each second optical terminal. The physical address of the second optical terminal uniquely identifies one second optical terminal. For example, the physical address of the second optical terminal may be a media access control (media access control, MAC) address of the second optical terminal, may be serial number (serial number, SN) information of the second optical terminal, or may be other information that can uniquely identify the second optical terminal. This is not limited herein. The bandwidth information of the second optical terminal indicates an upper bandwidth limit for data exchange between the second optical terminal and a field device corresponding to the second optical terminal.

Optionally, the information about each second optical terminal further includes electrical port information of the second optical terminal, and the electrical port information of the second optical terminal indicates an enabling status of an electrical port used by the second optical terminal to connect to another second optical terminal, for example, an electrical port number of the electrical port and a level value of the electrical port. The level value of the electrical port can indicate whether the electrical port is connected to another optical terminal, that is, whether the electrical port is in an unconnected state.

In a possible implementation, the optical head end is further configured to generate a management table, where the management table includes the information about the first optical terminal, the information about each second optical terminal, the management identifier of the first optical terminal, the management identifier of each second optical terminal, and third indication information, and the third indication information indicates that the second optical terminal is managed by the first optical terminal.

In this implementation, the optical head end can generate the management table, where the management table includes the third indication information indicating that the second optical terminal is managed by the first optical terminal. This helps the optical head end maintain and manage each second optical terminal connected to the first optical terminal through an electrical port, and further helps the optical head end improve efficiency of generating the data frame.

In a possible implementation, the communication system further includes the control device and field devices, the control device is connected to the optical head end, the first optical terminal is connected to at least one field device, and each second optical terminal is connected to at least one field device. The optical head end is further configured to: obtain the data of the at least one second optical terminal from the control device, and generate the data frame based on the data of the at least one second optical terminal and the management table. The first optical terminal is further configured to perform data exchange with the at least one field device connected to the first optical terminal. The second optical terminal is further configured to perform data exchange with the at least one field device connected to the second optical terminal.

In a possible implementation, the optical head end is connected to the optical port of the first optical terminal via an optical distribution network, the communication system further includes a third optical terminal, the optical head end is connected to an optical port of the third optical terminal via the optical distribution network, and the third optical terminal is connected to at least one field device.

According to a second aspect, this application provides an optical head end. The optical head end is used in a communication system, the communication system includes the optical head end, a first optical terminal, and n second optical terminals managed by the first optical terminal, the first optical terminal is connected to the optical head end through an optical port, the n second optical terminals are connected in series through electrical ports, the first optical terminal is connected, through an electrical port, to the n second optical terminals connected in series, and n is an integer greater than 0. Specifically, the optical head end includes a transceiver module and a processing module. The transceiver module is configured to obtain data of at least one of the n second optical terminals. The processing module is configured to generate a data frame based on the data of the at least one of the n second optical terminals, where the data frame includes the data of the at least one of the n second optical terminals. In addition, the transceiver module is further configured to send the data frame to the first optical terminal.

In this application, the optical head end can deliver, through the first optical terminal, the data of the second optical terminal to the at least one second optical terminal managed by the first optical terminal. This helps improve communication efficiency.

In a possible implementation, the data frame includes a data processing field of the first optical terminal and a data processing field of each of the n second optical terminals. The transceiver module is further configured to receive, from the first optical terminal, a data frame after data exchange, where an optical terminal corresponding to at least one data processing field in the data frame after data exchange performs data exchange on the data processing field, and the optical terminal corresponding to the data processing field includes the first optical terminal and/or the second optical terminal.

In a possible implementation, a frame header of the data frame includes a management identifier of each second optical terminal.

In a possible implementation, the frame header of the data frame further includes a management identifier of the first optical terminal.

In a possible implementation, the frame header of the data frame further includes first indication information, and the first indication information indicates the first optical terminal to send a data frame to a second optical terminal connected to the first optical terminal.

In a possible implementation, a data field of the data frame includes the management identifier of each second optical terminal, and the management identifier of each second optical terminal in the data field indicates a location that is of the data processing field corresponding to each second optical terminal and that is in the data field.

In a possible implementation, the data field of the data frame further includes the management identifier of the first optical terminal, and the management identifier of the first optical terminal in the data field indicates a location that is of the data processing field corresponding to the first optical terminal and that is in the data field.

In a possible implementation, the data field of the data frame further includes second indication information of each second optical terminal, and the second indication information indicates at least one data processing type of the data processing field corresponding to the second optical terminal and a length of a data processing field of each data processing type.

In a possible implementation, the data processing type includes read processing and/or write processing, and different data processing types correspond to different locations in the data processing field.

In a possible implementation, the transceiver module is further configured to obtain information about the first optical terminal and information about the n second optical terminals from the first optical terminal. The processing module is further configured to determine the management identifier of the first optical terminal and the management identifier of each of the n second optical terminals based on the information about the first optical terminal and the information about the n second optical terminals. The transceiver module is further configured to send the management identifier of the first optical terminal and the management identifier of each of the n second optical terminals to the first optical terminal.

In a possible implementation, information about each second optical terminal includes bandwidth information of the second optical terminal, a physical address of the second optical terminal, and electrical port information of the second optical terminal.

In a possible implementation, the processing module is further configured to generate a management table, where the management table includes the information about the first optical terminal, the information about each second optical terminal, the management identifier of the first optical terminal, the management identifier of each second optical terminal, and third indication information, and the third indication information indicates that the second optical terminal is managed by the first optical terminal.

In a possible implementation, the communication system further includes a control device and field devices, the control device is connected to the optical head end, the first optical terminal is connected to at least one field device, and each second optical terminal is connected to at least one field device. The transceiver module is specifically configured to obtain the data of the at least one second optical terminal from the control device. The processing module is specifically configured to generate the data frame based on the data of the at least one second optical terminal and the management table.

It should be noted that specific implementations and beneficial effects of this aspect are similar to some implementations of the first aspect. For details, refer to the specific implementations and beneficial effects of the first aspect. Details are not described herein again.

According to a third aspect, this application provides a first optical terminal. The first optical terminal is used in a communication system, the communication system includes an optical head end, the first optical terminal, and n second optical terminals managed by the first optical terminal, the first optical terminal is connected to the optical head end through an optical port, the n second optical terminals are connected in series through electrical ports, the first optical terminal is connected, through an electrical port, to the n second optical terminals connected in series, and n is an integer greater than 0. A transceiver module is included, and is configured to obtain a data frame from the optical head end through the optical port, where the data frame includes data of at least one of the n second optical terminals. The transceiver module is further configured to send, through the electrical port, a data frame to a second optical terminal connected to the first optical terminal.

In this application, in addition to the optical port, the first optical terminal further includes at least one electrical port configured to connect to another optical terminal. When the first optical terminal is connected to the at least one second optical terminal in series through the electrical port, the first optical terminal can obtain the data frame through the optical port, and send the data of the second optical terminal to the at least one second optical terminal through the electrical port. Because an electrical port-based connection manner has no optical signal attenuation problem caused by an optical port-based connection manner, a problem that a quantity of optical terminals is limited due to an optical path loss can be resolved. This helps expand a quantity of optical terminals that can be connected in the communication system, and further helps expand application of the communication system to an application scenario of massive nodes.

In a possible implementation, the data frame includes a data processing field of the first optical terminal and a data processing field of each of the n second optical terminals. The first optical terminal further includes a processing module. The processing module is configured to perform data exchange based on the data processing field corresponding to the first optical terminal in the data frame. The transceiver module is specifically configured to send, through the electrical port to the second optical terminal connected to the first optical terminal, a data frame after data exchange.

In a possible implementation, the transceiver module is further configured to: receive, from the second optical terminal through the electrical port, a data frame after data exchange; and send, to the optical head end through the optical port, the data frame after data exchange.

In a possible implementation, a frame header of the data frame includes a management identifier of each second optical terminal. The transceiver module is specifically configured to forward, based on a management identifier of the second optical terminal connected to the first optical terminal, a data frame to the second optical terminal in a cut-through manner.

In a possible implementation, the frame header of the data frame further includes a management identifier of the first optical terminal.

In a possible implementation, the frame header of the data frame further includes first indication information, and the first indication information indicates the first optical terminal to send a data frame to the second optical terminal connected to the first optical terminal.

In a possible implementation, a data field of the data frame includes the management identifier of each second optical terminal, and the management identifier of each second optical terminal in the data field indicates a location that is of the data processing field corresponding to each second optical terminal and that is in the data field.

In a possible implementation, the data field of the data frame further includes the management identifier of the first optical terminal, and the management identifier of the first optical terminal in the data field indicates a location that is of the data processing field corresponding to the first optical terminal and that is in the data field. The processing module is specifically configured to determine, based on the management identifier of the first optical terminal in the data field, the location that is of the data processing field corresponding to the first optical terminal and that is in the data field.

In a possible implementation, the data field of the data frame further includes second indication information of each second optical terminal, and the second indication information indicates at least one data processing type of the data processing field corresponding to the second optical terminal and a length of a data processing field of each data processing type.

In a possible implementation, the data processing type includes read processing and/or write processing, and different data processing types correspond to different locations in the data processing field.

In a possible implementation, the transceiver module is further configured to obtain information about the n second optical terminals. The processing module is further configured to register the first optical terminal and the n second optical terminals with the optical head end based on information about the first optical terminal and the information about the n second optical terminals. The transceiver module is further configured to: receive the management identifier of the first optical terminal and the management identifier of each of the n second optical terminals from the optical head end; and broadcast the management identifiers of the n second optical terminals to the n second optical terminals.

In a possible implementation, information about each second optical terminal includes bandwidth information of the second optical terminal, a physical address of the second optical terminal, and electrical port information of the second optical terminal.

It should be noted that specific implementations and beneficial effects of this aspect are similar to some implementations of the first aspect. For details, refer to the specific implementations and beneficial effects of the first aspect. Details are not described herein again.

According to a fourth aspect, this application provides a second optical terminal. The second optical terminal is used in a communication system, the communication system includes an optical head end, a first optical terminal, and n second optical terminals managed by the first optical terminal, the first optical terminal is connected to the optical head end through an optical port, the n second optical terminals are connected in series through electrical ports, the first optical terminal is connected, through an electrical port, to the n second optical terminals connected in series, and n is an integer greater than 0. A transceiver module is included, and is configured to receive a data frame from the first optical terminal or a previous-level second optical terminal through an electrical port. A processing module is included, and is configured to obtain data of the second optical terminal in the data frame. The transceiver module is further configured to send a data frame to a next-level second optical terminal connected to the second optical terminal.

In this application, the second optical terminal includes at least one electrical port configured to connect to another optical terminal. When the first optical terminal is connected to at least one second optical terminal in series through the electrical port, the second optical terminal can receive the data frame from the first optical terminal through the electrical port, to obtain the data that is of the second optical terminal and that is delivered by the optical head end. Because an electrical port-based connection manner has no optical signal attenuation problem caused by an optical port-based connection manner, a problem that a quantity of optical terminals is limited due to an optical path loss can be resolved. This helps expand a quantity of optical terminals that can be connected in the communication system, and further helps expand application of the communication system to an application scenario of massive nodes.

In a possible implementation, the data frame includes a data processing field of the first optical terminal and a data processing field of each of the n second optical terminals. The processing module is specifically configured to perform data exchange based on a data processing field that corresponds to the second optical terminal and that is in the received data frame. The transceiver module is specifically configured to send, to the next-level second optical terminal connected to the second optical terminal, a data frame after data exchange.

In a possible implementation, the transceiver module is further configured to transparently transmit, to the first optical terminal through at least one second optical terminal, a data frame after data exchange.

In a possible implementation, a frame header of the data frame includes a management identifier of each second optical terminal. The transceiver module is specifically configured to forward, based on a management identifier of the next-level second optical terminal connected to the second optical terminal, the data frame to the next-level second optical terminal in a cut-through manner.

In a possible implementation, the frame header of the data frame further includes a management identifier of the first optical terminal.

In a possible implementation, the frame header of the data frame further includes first indication information, and the first indication information indicates the first optical terminal to send a data frame to a second optical terminal connected to the first optical terminal.

In a possible implementation, a data field of the data frame includes the management identifier of each second optical terminal, and the management identifier of each second optical terminal in the data field indicates a location that is of the data processing field corresponding to each second optical terminal and that is in the data field. The processing module is specifically configured to determine, based on a management identifier of the second optical terminal in the data field, a location that is of the data processing field corresponding to the second optical terminal and that is in the data field.

In a possible implementation, the data field of the data frame further includes the management identifier of the first optical terminal, and the management identifier of the first optical terminal in the data field indicates a location that is of the data processing field corresponding to the first optical terminal and that is in the data field.

In a possible implementation, the data field of the data frame further includes second indication information of each second optical terminal, and the second indication information indicates at least one data processing type of the data processing field corresponding to the second optical terminal and a length of a data processing field of each data processing type.

In a possible implementation, the data processing type includes read processing and/or write processing, and different data processing types correspond to different locations in the data processing field. The processing module is specifically configured to write, based on the second indication information, data into a data processing field whose data processing type is read processing; and/or the processing module is specifically configured to read, based on the second indication information, data from a data processing field whose data processing type is write processing.

In a possible implementation, the transceiver module is further configured to obtain the management identifier of the second optical terminal, where the management identifier of the second optical terminal is determined by the optical head end based on information about the n second optical terminals.

In a possible implementation, information about each second optical terminal includes bandwidth information of the second optical terminal, a physical address of the second optical terminal, and electrical port information of the second optical terminal.

It should be noted that specific implementations and beneficial effects of this aspect are similar to some implementations of the first aspect. For details, refer to the specific implementations and beneficial effects of the first aspect. Details are not described herein again.

According to a fifth aspect, this application provides an optical module. The optical module includes a processor and a transceiver. The transceiver is configured to: receive an optical signal and send an optical signal. The processor is configured to implement some or all of functions of any optical head end in the second aspect.

According to a sixth aspect, this application provides an optical module. The optical module includes a processor and a transceiver. The transceiver is configured to: receive an optical signal and send an optical signal. The processor is configured to implement some or all of functions of any first optical terminal in the third aspect, or implement some or all of functions of any second optical terminal in the fourth aspect.

According to a seventh aspect, this application provides a chip, including at least one logic circuit and an input/output interface. The input/output interface is configured to input/output an electrical signal. The logic circuit is configured to implement some or all of functions of the optical head end in the second aspect.

According to an eighth aspect, this application provides a chip, including at least one logic circuit and an input/output interface. The input/output interface is configured to input/output an electrical signal. The logic circuit is configured to implement some or all of functions of the first optical terminal in the third aspect, or implement some or all of functions of the second optical terminal in the fourth aspect.

According to a ninth aspect, this application provides a control device. An optical head end is integrated into the control device. The control device can implement some or all of functions of any optical head end in the second aspect.

According to a tenth aspect, this application provides a field device. An optical terminal is integrated into the field device. The field device can implement some or all of functions of any first optical terminal in the third aspect, or implement some or all of functions of any second optical terminal in the fourth aspect.

### BRIEF DESCRIPTION OF DRAWINGS

FIG. 1A is a diagram of a network architecture of a communication system in a conventional technology;
FIG. 1B is an example diagram of a network architecture of a communication system in a conventional technology;
FIG. 1C is another example diagram of a network architecture of a communication system in a conventional technology;
FIG. 2A is a diagram of a network architecture of a communication system according to this application;
FIG. 2B is another diagram of a network architecture of a communication system according to this application;
FIG. 3A is an example diagram of a network architecture of a communication system according to this application;
FIG. 3B is another example diagram of a network architecture of a communication system according to this application;
FIG. 4A is an example diagram of data exchange performed by optical terminals according to this application;
FIG. 4B is an example diagram of a data frame according to this application;
FIG. 4C is another example diagram of a data frame according to this application;
FIG. 5 is a diagram of an embodiment of a communication apparatus according to this application;
FIG. 6 is a diagram of another embodiment of a communication apparatus according to this application;
FIG. 7 is a diagram of another embodiment of a communication apparatus according to this application;
FIG. 8 is a diagram of another embodiment of a communication apparatus according to this application; and
FIG. 9 is a diagram of a structure of a chip according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the term used in such a way are interchangeable in appropriate circumstances, so that embodiments described herein can be implemented in an order other than the content illustrated or described herein. In addition, the terms "include", "have", and any variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

For ease of understanding, the following first describes an optical bus system that uses all-optical networking in a conventional technology.

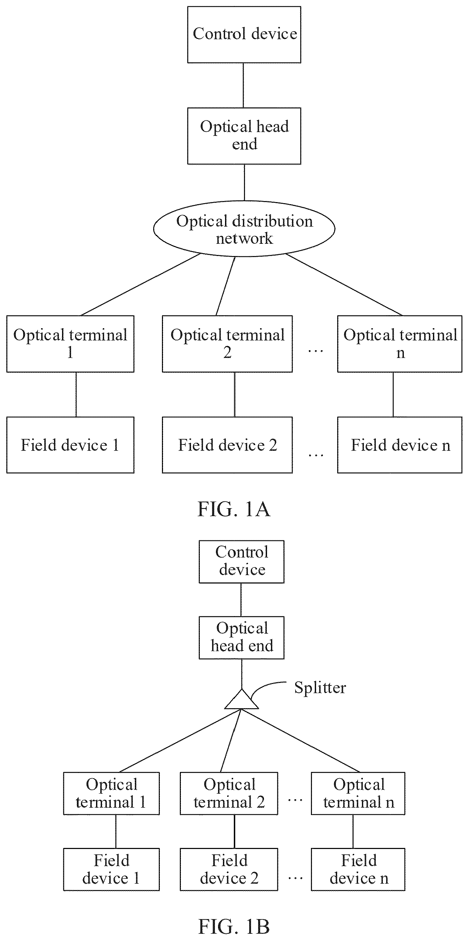

As shown in FIG. 1A, a conventional optical bus system includes an optical head end, an optical terminal, and an optical distribution network (also referred to as an optical distribution network or an optical distribution network) that connects the optical head end and the optical terminal. The optical head end is connected to a control device or integrated into the control device, the optical terminal is connected to a field device or integrated into the field device, and the optical head end is connected to a plurality of optical terminals through the optical distribution network. The control device may be a controller, for example, a programmable logic controller (programmable logic controller, PLC) or another hardware device that has a computing processing capability or a control capability other than the PLC. The field device may be a device that is controlled based on instructions delivered by the control device, for example, a device or an apparatus like a sensor, a regulator, a transmission, a relay, a machine tool, and a cutter in a conventional industrial production factory. The control device communicates with the field device through the optical bus system. Various information (for example, a running parameter, status information, and fault information) of the field device is transmitted to the control device far away from the field through the optical bus system, and the control device may send a control command, a maintenance command, and various other commands to a related field device through the optical bus system.

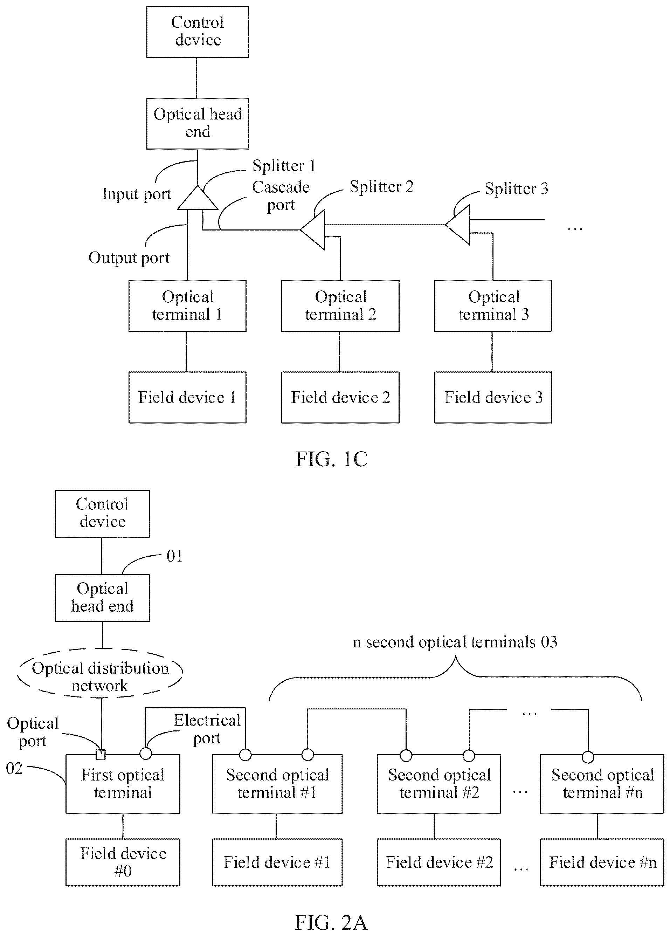

Generally, the optical distribution network may be implemented by one or more splitters. For example, the optical head end may be connected to the plurality of optical terminals by using one splitter, that is, the optical head end is connected to the plurality of optical terminals by using one-level optical splitting. For example, as shown in FIG. 1B, the optical bus system may use tree networking. The optical head end connected to the control device is connected to one splitter through a feeder fiber, and the splitter is connected to the plurality of optical terminals through a plurality of branch fibers. For example, the optical head end may alternatively be connected to the plurality of optical terminals by using a plurality of splitters, that is, the optical head end is connected to the plurality of optical terminals by using multi-level optical splitting. For example, as shown in FIG. 1C, the optical bus system may use P2MP networking. The optical head end connected to the control device is connected to an input port of a splitter 1 through a feeder fiber, an output port of the splitter 1 is connected to an optical terminal 1, and a cascade port of the splitter 1 is connected to a next-level splitter (namely, a splitter 2). An output port of the splitter 2 is connected to an optical terminal 2, and a cascade port of the splitter 2 is connected to a next-level splitter (namely, a splitter 3). An output port of the splitter 3 is connected to an optical terminal 3, and a cascade port of the splitter 3 is connected to a next-level splitter. The rest may be deduced by analogy, and details are not described herein.

It can be learned that, in the optical bus system based on the all-optical networking in the conventional technology, one optical head end is connected to the plurality of optical terminals mainly through the one-level or multi-level optical splitting. However, a series of losses such as an optical fiber loss, an optical splitting loss, an additional optical splitting loss, and a movable joint loss cause a total loss of an optical link to increase as data of a connected optical terminal increases. Consequently, a quantity of optical terminals that can be connected in the optical bus system is limited. However, with development of industrial automation, the control device needs to perform more precise, real-time, and complex control on more field devices. Consequently, a current optical bus application scenario based on the all-optical networking is limited, and cannot meet a requirement of current industrial automation development.

In view of this, this application provides a communication system and a communication apparatus, to increase a quantity of optical terminals that can be connected in an optical bus system. This helps a control device control more field devices, thereby expanding an application scenario of the optical bus system.

The following describes the communication system provided in this application with reference to FIG. 2A.

As shown in FIG. 2A, the communication system provided in this application includes an optical head end 01 and at least two optical terminals. Each of the at least two optical terminals includes at least one electrical port configured to connect to another optical terminal. Optionally, at least one of the at least two optical terminals further includes an optical port. It should be noted that the optical port is an optical fiber interface, is a physical interface configured to connect to an optical fiber cable, and is for transmission of an optical signal. The optical port may be an optical port in a conventional technology. For example, the optical port may be any type of optical port like a square connector (square connector, SC) interface, a stab&twist (stab&twist, ST) interface, or a ferrule connector (ferrule connector, FC) interface. Alternatively, the optical port may be a newly defined optical port. This is not limited in this application. In addition, the electrical port is a concept relative to the optical port, is an interface configured to connect to a conductive medium like a copper cable, and is for transmission of an electrical signal. For example, the electrical port may be a twisted pair interface, for example, an RJ45 interface. This is not limited in this application. For ease of description, in this application, an optical terminal connected to the optical head end 01 through the optical port is referred to as a first optical terminal 02, and an optical terminal indirectly connected to the optical head end through an electrical port of at least one optical terminal is referred to as a second optical terminal 03. The first optical terminal 02 manages at least one second optical terminal 03. The following uses an example in which the first optical terminal 02 manages n second optical terminals 03 for description, where n is an integer greater than 0.

The first optical terminal 02 includes at least one optical port and at least one electrical port configured to connect to another optical terminal. The optical port of the first optical terminal 02 is configured to connect to the optical head end 01 through an optical fiber or an optical distribution network, and the first optical terminal 02 and the optical head end 01 perform transmission of an optical signal through the optical port to implement communication. In addition, the electrical port of the first optical terminal 02 is configured to connect to the second optical terminal 03 managed by the first optical terminal 02, and the first optical terminal 02 and the second optical terminal 03 managed by the first optical terminal 02 perform transmission of an electrical signal through the electrical port to implement communication. For example, the first optical terminal 02 in FIG. 2A is connected to a second optical terminal #1 through the electrical port, and the first optical terminal 02 can exchange an electrical signal with the second optical terminal #1 through the electrical port, to implement communication between the first optical terminal 02 and the second optical terminal #1.

The second optical terminal 03 includes at least two electrical ports configured to connect to other optical terminals, where one electrical port is configured to connect to a previous-level optical terminal, and another electrical port is configured to connect to a next-level optical terminal. For example, the second optical terminal #1 shown in FIG. 2A is used as an example. One electrical port of the second optical terminal #1 is configured to connect to the first optical terminal (namely, a previous-level optical terminal of the second optical terminal #1), and the other electrical port of the second optical terminal #1 is configured to connect to a second optical terminal #2 (namely, a next-level optical terminal of the second optical terminal #1). For another example, the second optical terminal #2 shown in FIG. 2A is used as an example. One electrical port of the second optical terminal #2 is configured to connect to the second optical terminal #1 (namely, a previous-level optical terminal of the second optical terminal #2), and the other electrical port of the second optical terminal #2 is configured to connect to a second optical terminal #3 (namely, a next-level optical terminal of the second optical terminal #2). By analogy, the n second optical terminals 03 managed by the first optical terminal 02 are connected in series through electrical ports, and the first optical terminal 02 is connected to the n second optical terminals 03 in series through the electrical port.

It should be noted that, even if the second optical terminal 03 has the at least two electrical ports configured to connect to the other optical terminals, the second optical terminal 03 may alternatively use only one of the electrical ports to connect to another optical terminal, and leave another electrical port unconnected, that is, the another electrical port is neither connected to an optical terminal nor connected to another device. For example, as shown in FIG. 2A, one electrical port of a second optical terminal #n at the end of the n second optical terminals is connected to a second optical terminal #(n-1), and the other electrical port of the second optical terminal #n is unconnected. For another example, when n=1, the first optical terminal 02 is connected to only one second optical terminal (namely, the second optical terminal #1) in series through the electrical port, one electrical port of the second optical terminal #1 is connected to the electrical port of the first optical terminal 02, and the other electrical port of the second optical terminal #1 is unconnected.

Optionally, the communication system further includes a control device and field devices. The optical head end 01 is connected to the control device, and the first optical terminal 02 and the second optical terminal 03 are separately connected to the field devices. The first optical terminal 02 may be connected to at least one field device, and the second optical terminal 03 may also be connected to at least one field device. This is not limited herein. It should be noted that the control device and the optical head end 01 may be deployed separately, or may be deployed together, that is, the optical head end 01 is integrated into the control device. When the control device and the optical head end 01 are deployed separately, an interface between the control device and the optical head end 01 may be any one of an Ethernet interface (for example, an Ethernet interface like an FE interface, a GE interface, or a 10GE interface), a PCIE interface, or another interface. When the optical head end 01 and the control device are deployed together, an interface between the optical head end 01 and the control device is a software transceiver interface inside a same device. In addition, an optical terminal (the first optical terminal 02 or the second optical terminal 03) and the field device may be deployed separately, or may be deployed together, that is, the optical terminal (the first optical terminal 02 or the second optical terminal 03) is integrated into the field device. As shown in FIG. 2A, the first optical terminal 02 and a field device #0 are used as an example. When the first optical terminal 02 and the field device #0 are deployed separately, an interface between the first optical terminal 02 and the field device #0 may be any one of an Ethernet interface (for example, FE, GE, or 10GE), a serial peripheral interface (serial peripheral interface, SPI), a general-purpose input/output (general-purpose input/output, GPIO), an RS422, a parallel interface, an inter-integrated circuit (inter-integrated circuit, I2C) bus interface, or another interface. When the first optical terminal 02 and the field device #0 are deployed together, an interface between the first optical terminal 02 and the field device #0 is a software transceiver interface inside a same device. For other descriptions of the control device and the field device, refer to the foregoing related descriptions in FIG. 1A. Details are not described herein again.

Specifically, when the control device has data to be sent to one or more second optical terminals 03, the optical head end 01 may obtain the data of the at least one second optical terminal 03 from the control device, and generate a data frame. The optical head end 01 sends the data frame to the first optical terminal 02, where the data frame includes the data of the at least one of the n second optical terminals. For example, the optical head end 01 sends an optical signal to the first optical terminal 02 through the optical fiber or the optical distribution network, where the optical signal carries the data frame. The first optical terminal 02 obtains the data frame through the optical port. To be specific, the first optical terminal 02 receives, through the optical port, the optical signal that carries the data frame, and converts the optical signal into an electrical signal to obtain the data frame in a form of the electrical signal. Then, the first optical terminal 02 sends, through the electrical port, a data frame to a second optical terminal 03 connected to the first optical terminal 02. Each of the at least one second optical terminal 03 receives a data frame from the first optical terminal 02 or a previous-level second optical terminal 03 through an electrical port, obtains data of the second optical terminal 03 in the data frame, and sends a data frame to a next-level second optical terminal 03 connected to the second optical terminal 03. In addition, each second optical terminal 03 may further transmit the obtained data to a field device connected to the second optical terminal 03.

It should be understood that, because the n second optical terminals 03 are connected in series through the electrical ports, the data frame delivered by the first optical terminal 02 is transmitted to each of the n second optical terminals 03 level by level, that is, each of the n second optical terminals 03 may receive a data frame. If a second optical terminal 03 that receives a data frame determines that data of the second optical terminal 03 exists in the data frame, the second optical terminal 03 obtains the data from the data frame, and sends a data frame to a next-level second optical terminal 03. If a second optical terminal 03 that receives a data frame determines that data of the second optical terminal 03 does not exist in the data frame, the second optical terminal 03 sends a data frame to a next-level second optical terminal 03 until the data frame is transmitted to a last-level second optical terminal 03 (for example, the n^{th} second optical terminal #n shown in FIG. 2A). Optionally, the data frame may further include data of the first optical terminal 02. In this case, before sending, through the electrical port, the data frame to the second optical terminal 03 connected to the first optical terminal 02, the first optical terminal 02 further obtains the data of the first optical terminal 02 from the data frame.

For ease of understanding, FIG. 2A is used as an example for description. As shown in FIG. 2A, if the control device has data to be sent to the first optical terminal 02 and the second optical terminal #2, the optical head end 01 generates a data frame #1 based on the data of the first optical terminal 02 and the data of the second optical terminal #2 that are obtained from the control device, where the data frame #1 includes the data of the first optical terminal 02 and the data of the second optical terminal #2. The optical head end 01 sends, to the first optical terminal 02 through the optical fiber or the optical distribution network, an optical signal that carries the data frame #1. The first optical terminal 02 obtains the data frame #1 through the optical port. To be specific, the first optical terminal 02 receives, through the optical port, the optical signal that carries the data frame #1, and converts the optical signal into an electrical signal to obtain the data frame #1 in a form of the electrical signal. Then, the first optical terminal 02 obtains the data of the first optical terminal 02 from the data frame #1. Then, the first optical terminal 02 sends a data frame #1 to the second optical terminal #1 through the electrical port between the first optical terminal 02 and the second optical terminal #1. The second optical terminal #1 receives the data frame #1 from the first optical terminal 02 through the electrical port. After the second optical terminal #1 determines that the data frame #1 does not include data of the second optical terminal #1, the second optical terminal #1 sends a data frame #1 to a next-level second optical terminal (namely, the second optical terminal #2) connected to the second optical terminal #1. The second optical terminal #2 receives the data frame #1 from the second optical terminal #1 through the electrical port, and obtains the data of the second optical terminal #2 from the data frame #1. Then, the second optical terminal #2 sends a data frame #1 to a next-level second optical terminal (namely, the second optical terminal #3) connected to the second optical terminal #2. The rest may be deduced by analogy. The optical head end 01 can send data of optical terminals to the plurality of optical terminals (including the first optical terminal 02 and second optical terminals 03) connected in series through electrical ports. Each second optical terminal 03 can exchange data with the field device corresponding to the second optical terminal 03, and the data of each second optical terminal 03 is from the control device. Therefore, this helps the control device send data to a plurality of field devices.

It should be noted that the data of the second optical terminal 03 includes but is not limited to instructions, service data, maintenance information, and the like that are delivered by the control device and that are to be transmitted to the second optical terminal 03 and/or the field device. In this application, the data of the second optical terminal 03 is used as an example for description. In some scenarios, the data of the second optical terminal 03 may also be understood as data to be transmitted by the second optical terminal 03 to the field device connected to the second optical terminal 03.

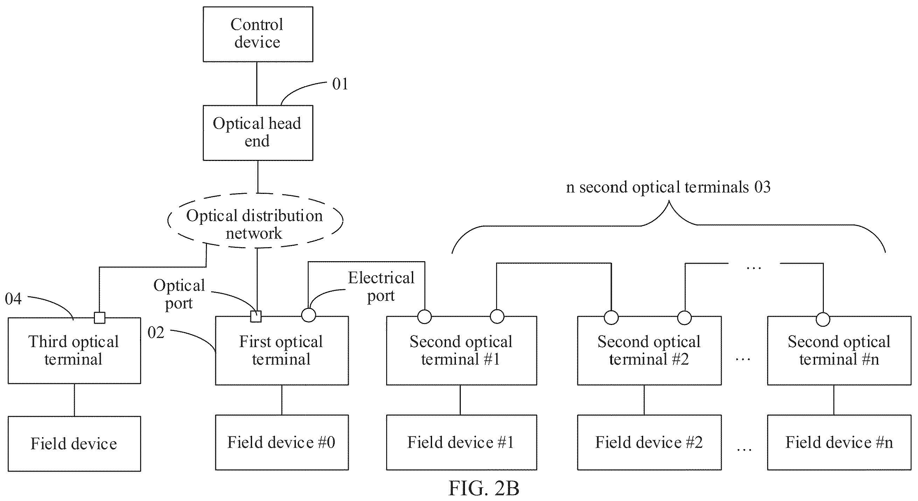

Optionally, as shown in FIG. 2B, the communication system may further include a third optical terminal 04. The third optical terminal 04 may be an optical terminal in the conventional technology, that is, the third optical terminal 04 cannot be connected to another optical terminal through an electrical port. Alternatively, the third optical terminal 04 may be an optical terminal (for example, the first optical terminal 02 or the second optical terminal 03) that has the foregoing electrical port and that is provided in this application. However, the third optical terminal 04 is connected to only the optical head end 01 through an optical port, and the electrical port of the third optical terminal 04 is unconnected to another optical terminal. For example, the communication system may include a plurality of first optical terminals 02 and a plurality of third optical terminals 04, and each first optical terminal 02 may further manage a plurality of second optical terminals 03. In a downlink transmission process, the optical distribution network splits a downlink optical signal from the optical head end 01 into a plurality of downlink optical signals, and distributes the plurality of downlink optical signals to the plurality of first optical terminals 02 and the plurality of third optical terminals 04 that are connected to the optical head end 01 through optical ports, and then each first optical terminal 02 transmits, in the manner described in FIG. 2A, an electrical signal that carries data of the second optical terminal 03 to the plurality of second optical terminals 03 connected in series through electrical ports. In an uplink transmission process, the first optical terminal 02 can collect data of the second optical terminals 03 managed by the first optical terminal 02 to generate an uplink optical signal. The optical distribution network combines uplink optical signals from the plurality of first optical terminals 02 and the plurality of third optical terminals 04 into one optical signal, and sends the optical signal to the optical head end 01.

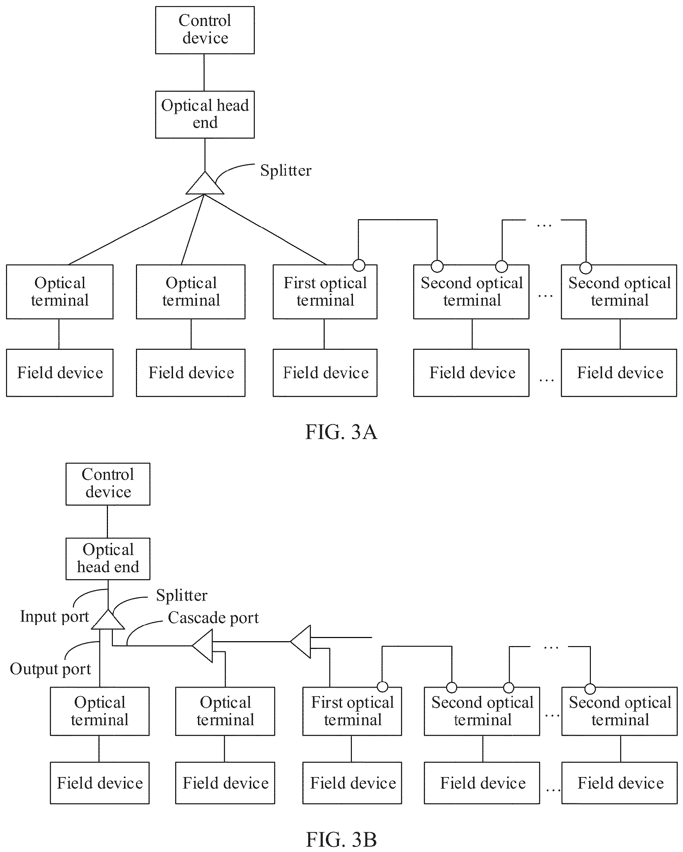

It should be noted that the optical distribution network may include an optical fiber, an optical coupler, a splitter, a divider, or another device. This is not limited in this application. The device in the optical distribution network may be a passive optical device, that is, the device in the optical distribution network does not need a power supply during transmission and distribution of an optical signal. The splitter (Splitter) is used as an example. The splitter may be connected to the optical head end 01 through a feeder fiber, and connected to a plurality of optical terminals (for example, the first optical terminal 02 and the third optical terminal 04) through a plurality of branch fibers, to implement a point-to-multipoint connection between one optical head end and the plurality of optical terminals, and implement a point-to-multipoint optical splitting or combining function. The splitter may be a one-level splitter shown in FIG. 3A, or may be a multi-level splitter shown in FIG. 3B. Alternatively, the splitter may be an even splitter or an uneven splitter. This is not limited in this application.

It should be further noted that, optical communication between the optical head end 01 and the optical terminal (for example, the first optical terminal 02 or the third optical terminal 04) in the communication system provided in this application may be point-to-multipoint optical communication that is based on any type of passive optical network (passive optical network, PON). The optical head end 01 communicates with the optical terminal (for example, the first optical terminal 02 or the third optical terminal 04) by using any PON communication mechanism and protocol. For example, the optical head end 01 allocates a different uplink slot to each optical terminal (for example, the first optical terminal 02 or the third optical terminal 04), and each optical terminal (for example, the first optical terminal 02 or the third optical terminal 04) sends uplink data or an uplink transmission frame in the uplink slot allocated by the optical head end 01 to the optical terminal, to ensure that no conflict or interference occurs in a transmission process of the uplink data sent by each optical terminal. A specific PON communication mechanism and protocol are not described herein.

It should be further noted that names of the devices in the system shown in FIG. 2A or FIG. 2B are merely examples, and the names of the devices in specific implementation may alternatively be other names. For example, the optical head end may also be referred to as an optical controller, an optical main station, an optical communication device, or the like, and the optical terminal may also be referred to as an optical substation, an optical communication device, or the like. This is not specifically limited in this application.

In the communication system provided in this application, the optical terminal includes at least one electrical port configured to connect to another optical terminal. When the first optical terminal 02 is connected to the at least one second optical terminal 03 in series through the electrical port, the first optical terminal 02 can send the data of the second optical terminal 03 to the at least one second optical terminal 03 through the electrical port, and the second optical terminal 03 can receive the data frame from the first optical terminal 02 through the electrical port, to obtain the data that is of the second optical terminal 03 and that is delivered by the optical head end 01. Because an electrical port-based connection manner has no optical signal attenuation problem caused by an optical port-based connection manner, this helps expand a quantity of optical terminals that can be connected in the communication system, and further helps expand application of the communication system to an application scenario of massive nodes.

It should be understood that, before the optical head end 01 sends the data frame to the first optical terminal 02, the first optical terminal 02 and the n second optical terminals 03 have been registered with the optical head end 01, and the optical head end 01 can obtain information about the first optical terminal 02 and information about the n second optical terminals 03 in a registration procedure, so that the optical head end 01 generates the data frame based on the information about the first optical terminal 02 and the information about the n second optical terminals 03. The following briefly describes a process in which the first optical terminal 02 registers with the optical head end 01.

Specifically, the first optical terminal 02 obtains the information about the n second optical terminals 03. For example, each time one second optical terminal 03 goes online, the second optical terminal 03 transparently transmits information about the second optical terminal 03 to the first optical terminal 02 through an electrical port, and the first optical terminal 02 can receive the information about the n second optical terminals 03 through the electrical port.

Optionally, information about each second optical terminal 03 includes a physical address of each second optical terminal 03 and bandwidth information of each second optical terminal 03. The physical address of the second optical terminal 03 uniquely identifies one second optical terminal 03. For example, the physical address of the second optical terminal 03 may be a media access control (media access control, MAC) address of the second optical terminal 03, may be serial number (serial number, SN) information of the second optical terminal 03, or may be other information that can uniquely identify the second optical terminal 03. This is not limited herein. The bandwidth information of the second optical terminal 03 indicates an upper bandwidth limit for data exchange between the second optical terminal 03 and the field device corresponding to the second optical terminal 03. Bandwidth values indicated by bandwidth information of different second optical terminals 03 may be the same or may be different. This is not limited in this application. It should be noted that, in some application scenarios, the bandwidth information is also referred to as an electrical port rate, and is an upper bandwidth limit of an interface between the second optical terminal 03 and the field device. A unit of the bandwidth value indicated by the bandwidth information may be MHz, GHz, or another unit. A specific value of the bandwidth information is not limited in this application.

For example, the physical address of the second optical terminal 03 is a MAC address. The information that is about the n second optical terminals 03 and that is obtained by the first optical terminal 02 may be shown in the following Table 1-1.

**Table 1-1**

| Physical address of the second optical terminal 03 | Bandwidth information of the second optical terminal 03 |
|---|---|
| MAC #1 | Bandwidth value 1 |
| MAC #2 | Bandwidth value 2 |
| MAC #3 | Bandwidth value 3 |
| ... | ... |
| MAC #n | Bandwidth value n |

Optionally, the information about each second optical terminal 03 further includes electrical port information of the second optical terminal 03, and the electrical port information of the second optical terminal 03 indicates an enabling status of an electrical port used by the second optical terminal 03 to connect to another second optical terminal 03, for example, an electrical port number of the electrical port and a level value of the electrical port. The level value of the electrical port can indicate whether the electrical port is connected to another optical terminal, that is, whether the electrical port is in an unconnected state.

For example, the physical address of the second optical terminal 03 is SN information. The information that is about the n second optical terminals 03 and that is obtained by the first optical terminal 02 may be shown in the following Table 1-2.

**Table 1-2**

| Physical address of the second optical terminal 03 | Bandwidth information of the second optical terminal 03 | Electrical port information of the second optical terminal 03 |
|---|---|---|
| SN #1 | Bandwidth value 1 | Electrical port number #1 |
| | | Level value #1 |
| SN #2 | Bandwidth value 2 | Electrical port number #2 |
| | | Level value #2 |
| SN #3 | Bandwidth value 3 | Electrical port number #3 |
| | | Level value #3 |
| ... | ... | ... |
| SN #n | Bandwidth value n | Electrical port number #n |
| | | Level value #n |

After the first optical terminal 02 obtains the information about the n second optical terminals 03, the first optical terminal 02 registers the first optical terminal 02 and the n second optical terminals 03 with the optical head end 01 based on the information about the first optical terminal 02 and the information about the n second optical terminals 03. The optical head end 01 allocates management identifiers to the successfully registered first optical terminal 02 and n second optical terminals 03 based on the information about the first optical terminal 02 and the information about the n second optical terminals 03 managed by the first optical terminal 02. In other words, the optical head end 01 generates a management identifier of the first optical terminal 02 and management identifiers of the n second optical terminals 03 based on the information about the first optical terminal 02 and the information about the n second optical terminals 03. For example, the management identifier may be a serial number or an IO ID determined by the optical head end 01. A specific implementation form of the management identifier is not limited in this application. An example in which the management identifier is the IO ID is used below for description.

In a possible implementation, the management identifiers that are of the optical terminals and that are generated by the optical head end 01 are irrelevant to a serial connection sequence of the optical terminals. Because the optical head end 01 can obtain the information about the n second optical terminals 03 from the first optical terminal 02, the optical head end 01 can determine that the n second optical terminals 03 are managed by the first optical terminal 02, that is, the n second optical terminals 03 are connected in series to the electrical port of the first optical terminal 02. In this case, the optical head end 01 allocates the management identifiers to the second optical terminals 03 by using the first optical terminal 02 as a start point. Optionally, a management identifier of each second optical terminal 03 cannot indicate a connection relationship between the second optical terminal 03 and another second optical terminal 03. FIG. 2A is used as an example. The management identifier of the first optical terminal 02 is IO 0, a management identifier of a second optical terminal whose MAC address is #1 is IO 1, a management identifier of a second optical terminal whose MAC address is #2 is IO 2, and so on.

In another possible implementation, the management identifiers that are of the optical terminals and that are generated by the optical head end 01 are related to a serial connection sequence of the optical terminals. In this implementation, the optical head end 01 further needs to obtain topology information from the first optical terminal 02, where the topology information indicates a serial connection sequence of the n second optical terminals 03. The optical head end 01 sequentially allocates the management identifiers to the second optical terminals 03 based on the serial connection sequence of the second optical terminals 03. Optionally, a management identifier of each second optical terminal 03 can indicate a connection relationship between the second optical terminal 03 and another second optical terminal 03. For example, the management identifiers of the n second optical terminals 03 are numbered based on a serial connection relationship between the n second optical terminals 03. For example, FIG. 2A is used as an example. The management identifier of the first optical terminal 02 is IO 0, a management identifier of the second optical terminal #1 connected to the first optical terminal 02 is IO 1, a management identifier of the second optical terminal #2 connected to the second optical terminal #1 is IO 2, and so on.

It should be noted that the management identifier of the first optical terminal 02 and the management identifier of the second optical terminal 03 are uniformly encoded by the optical head end 01, but different address coding modes may be used for the management identifier of the first optical terminal 02 and the management identifier of the second optical terminal 03. When the different address coding modes may be used for the management identifier of the first optical terminal 02 and the management identifier of the second optical terminal 03, this helps the first optical terminal 02 or the second optical terminal 03 quickly distinguish between the management identifier of the first optical terminal 02 and the management identifier of the second optical terminal 03, thereby improving efficiency of reading the data frame by each optical terminal.

Optionally, the optical head end 01 sends the management identifier of the first optical terminal 02 and the management identifier of each of the n second optical terminals 03 to the first optical terminal 02. Optionally, the first optical terminal 02 broadcasts the management identifiers of the n second optical terminals 03 to the n second optical terminals 03.

Optionally, the optical head end 01 correspondingly stores, in a storage medium (for example, a memory, a register, or a cache), information (for example, information such as a physical address and bandwidth information) about and a management identifier of each of the successfully registered first optical terminal 02 and n second optical terminals 03. In this application, a data structure that stores the information (for example, the information such as the physical address and the bandwidth information) about and the management identifier of each optical terminal is referred to as a management table. It should be understood that in actual application, the management table may be an array, a mapping table, or another data structure. This is not limited herein. The management table indicates the information about the first optical terminal 02 that has been registered with the optical head end 01 and the information about the n second optical terminals 03 managed by the first optical terminal 02.

In a possible example, the management table includes the information about the first optical terminal 02, the information about each second optical terminal 03, the management identifier of the first optical terminal 02, and the management identifier of each second optical terminal 03.

For example, the information about the first optical terminal 02 includes the physical address and the bandwidth information of the first optical terminal 02, the information about the second optical terminal 03 includes the physical address and the bandwidth information of the second optical terminal 03, and the physical address is a MAC address. The management table generated by the optical head end 01 may be shown in the following Table 2-1.

**Table 2-1**

| Management identifier of the optical terminal | Physical address of the optical terminal | Bandwidth information of the second optical terminal 03 |
|---|---|---|
| IO 0 | MAC #0 | - |
| IO 1 | MAC #1 | Bandwidth value 1 |
| IO 2 | MAC #2 | Bandwidth value 2 |
| IO 3 | MAC #3 | Bandwidth value 3 |
| ... | ... | ... |
| IO n | MAC #n | Bandwidth value n |

In another possible example, the management table includes the information about the first optical terminal 02, the information about each second optical terminal 03, the management identifier of the first optical terminal 02, the management identifier of each second optical terminal 03, and third indication information, and the third indication information indicates that the second optical terminal is managed by the first optical terminal 02. When there are a plurality of first optical terminals 02 or at least one third optical terminal 04 in the communication system, setting the third indication information in the management table helps the optical head end 01 accurately distinguish between second optical terminals 03 managed by the first optical terminals 02, so that efficiency of distributing data to optical terminals by the optical head end 01 is improved.

It should be further noted that, in different scenarios, processes in which the first optical terminal 02 applies for registration with the optical head end 01 are different. For example, in a scenario related to time division multiplexing (time division multiplexing, TDM) and/or time division multiple access (time division multiple access, TDMA), the optical head end 01 and the first optical terminal 02 need to first perform a time synchronization procedure and a ranging procedure to complete registration. For another example, in a scenario related to frequency division multiplexing (frequency division multiplexing, FDM) and/or frequency division multiple access (frequency division multiple access, FDMA), the optical head end 01 and the first optical terminal 02 need to first perform a frequency synchronization procedure to complete registration. A specific registration process is not described in detail in this application.

Further, the optical head end 01 can generate the data frame based on the management table and deliver the data frame. Specifically, the optical head end 01 generates the data frame based on the data of the at least one second optical terminal 03 from the control device and the management table. The data frame includes data processing fields of a plurality of optical terminals, and each data processing field is used to carry data exchanged between the optical head end 01 and the optical terminal. It should be noted that a data processing field of an optical terminal in the data frame may carry data of the optical terminal, or may not carry data of the optical terminal. After receiving the data frame, each optical terminal can perform data exchange based on a data processing field corresponding to the optical terminal, and then send, to a next-level optical terminal, a data frame after data exchange. After a last optical terminal managed by the first optical terminal 02 performs data exchange, the optical terminal transparently transmits, to the first optical terminal, a data frame after data exchange.

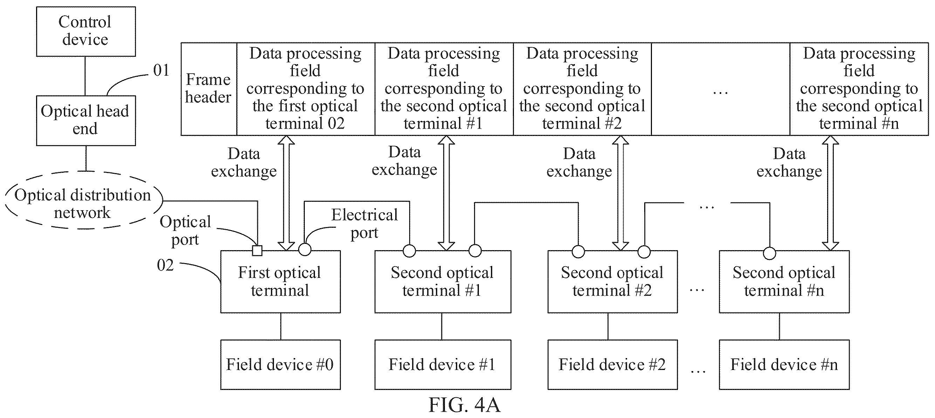

For example, as shown in FIG. 4A, the data frame obtained by the first optical terminal 02 from the optical head end 01 includes a data processing field of the first optical terminal 02 and a data processing field of each of the n second optical terminals 03. The data processing field of the first optical terminal 02 is used to carry the data of the first optical terminal 02, and the data processing field of the second optical terminal 03 is used to carry the data of the second optical terminal 03. After the first optical terminal 02 obtains the data frame through the optical port, the first optical terminal 02 performs data exchange based on the data processing field that corresponds to the first optical terminal 02 and that is in the data frame, and sends, through the electrical port to the second optical terminal #1 connected to the first optical terminal 02, a data frame after data exchange. After the second optical terminal #1 obtains the data frame from the first optical terminal 02 through the electrical port, the second optical terminal #1 performs data exchange based on a data processing field that corresponds to the second optical terminal #1 and that is in the received data frame, and sends, to the next-level second optical terminal (namely, the second optical terminal #2) connected to the second optical terminal #1, a data frame after data exchange. After the second optical terminal #2 obtains the data frame from the second optical terminal #1 through the electrical port, the second optical terminal #2 performs data exchange based on a data processing field that corresponds to the second optical terminal #2 and that is in the received data frame, and sends, to the next-level second optical terminal (namely, the second optical terminal #3) connected to the second optical terminal #2, a data frame after data exchange. By analogy, the data frame is transmitted level by level from the first optical terminal 02 to each second optical terminal managed by the first optical terminal 02, and finally reaches the second optical terminal #n. After performing data exchange based on a data processing field that corresponds to the second optical terminal #n and that is in a received data frame, the second optical terminal #n transparently transmits, to the first optical terminal 02 through an optical terminal between the first optical terminal 02 and the second optical terminal #n, a data frame after data exchange. Optionally, the first optical terminal 02 sends, to the optical head end, the data frame after data exchange.

Optionally, the data exchange includes data processing processes such as read processing, write processing, read/write processing, broadcast write processing, and loopback testing. The read processing means that an optical head end obtains data from an optical terminal via a data frame, that is, the optical terminal writes the data into a data processing field of the data frame. The write processing means that an optical head end writes data into an optical terminal via a data frame, that is, the optical terminal reads the data from a data processing field of the data frame. The broadcast write processing means that an optical head end writes same data into each optical terminal via a data frame, that is, each optical terminal reads the same data from the data frame. The loopback testing means testing connectivity of a link for exchanging data between optical terminals through an electrical port. In actual application, there may be another type of data exchange. This is not limited in this application. In subsequent embodiments, the read processing and the write processing are mainly used as examples for description.

It can be learned that, as the data frame is transmitted level by level from the first optical terminal to the last second optical terminal (for example, the second optical terminal #n in FIG. 4A) managed by the first optical terminal, each optical terminal can perform data processing in a data processing field that corresponds to each optical terminal and that is in the data frame, and the last second optical terminal (for example, the second optical terminal #n in FIG. 4A) managed by the first optical terminal may transparently transmit, to the first optical terminal, the data frame after data exchange. Each optical terminal performs data exchange in the corresponding data processing field, and each optical terminal does not need to parse a data processing field corresponding to another optical terminal or parse the entire data frame. Therefore, this helps each optical terminal quickly write data into or read data from the data frame. In addition, the last second optical terminal transparently transmits, to the first optical terminal through at least one second optical terminal, the data frame after data exchange. This helps quickly transmit, to the first optical terminal, the data frame after data exchange, and then transmit the data frame to the optical head end. Therefore, this helps improve efficiency of data exchange between the optical head end and the optical terminal, and further helps improve efficiency of data exchange between the control device and the field device.

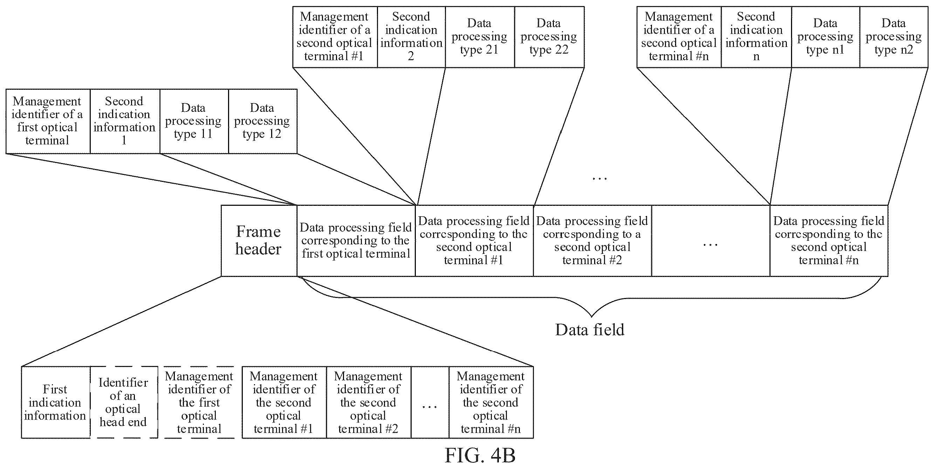

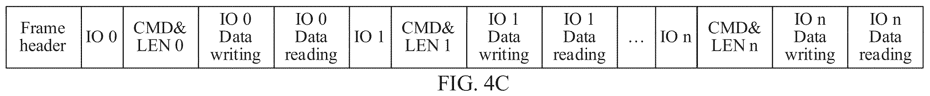

The following describes a main structure of the data frame provided in this application with reference to FIG. 4B and FIG. 4C.

As shown in FIG. 4B, the data frame includes a frame header and a data field.

The frame header of the data frame includes the management identifier of the second optical terminal 03. For example, if the first optical terminal 02 manages the n second optical terminals 03, the frame header of the data frame includes the management identifier of each of the n second optical terminals 03, and different second optical terminals 03 have different management identifiers.

Specifically, the first optical terminal 02 forwards, based on a management identifier of the second optical terminal 03 connected to the first optical terminal 02, the data frame to the second optical terminal 03 in a cut-through (CUT-THROUGH) (also referred to as fast-forward (fast-forward)) manner. Each of the n second optical terminals 03 forwards, based on a management identifier of a next-level second optical terminal 03 connected to the second optical terminal 03, a data frame to the next-level second optical terminal 03 in a cut-through manner.

For example, as shown in FIG. 4A, when the first optical terminal 02 obtains the data frame from the optical head end 01, the first optical terminal 02 first reads the frame header, and then reads the data processing field that corresponds to the first optical terminal 02 and that is in the data field. When the first optical terminal 02 reads the management identifier of the second optical terminal #1 in the frame header, the first optical terminal 02 can determine to send the data frame to the second optical terminal #1 rather than another optical terminal after performing data exchange. Similarly, when the second optical terminal #1 obtains the data frame from the first optical terminal 02, the second optical terminal #1 first reads the frame header, and then reads the data processing field that corresponds to the second optical terminal #1 and that is in the data field. When the second optical terminal #1 reads the management identifier of the second optical terminal #2 in the frame header, the second optical terminal #1 can determine to send the data frame to the second optical terminal #2 rather than another optical terminal after performing data exchange. The rest may be deduced by analogy. Details are not described herein.

Optionally, the frame header of the data frame further includes the management identifier of the first optical terminal 02. When the communication system includes a plurality of first optical terminals 02, the management identifier of the first optical terminal 02 in the frame header is used by the optical head end 01 to distinguish a first optical terminal 02 from which the data frame comes. For example, after the last second optical terminal #n in the n second optical terminals 03 managed by the first optical terminal 02 performs data exchange, the second optical terminal #n can quickly and transparently transmit, to the first optical terminal 02 based on the management identifier of the first optical terminal 02 in the frame header, the data frame after data exchange.

It can be learned that, because the frame header of the data frame includes the management identifier of each second optical terminal 03, when receiving the frame header, the first optical terminal 02 may determine a next hop for forwarding, that is, the data frame is forwarded between optical terminals in a cut-through manner. This helps improve data frame forwarding efficiency, and further helps reduce a network delay.

In a possible implementation, as shown in FIG. 4B, the frame header of the data frame further includes first indication information, and the first indication information indicates the first optical terminal 02 to send the data frame to the second optical terminal 03 connected to the first optical terminal 02. It may also be understood as that the first indication information indicates that the data frame carries the data processing field of the second optical terminal 03.

In a possible implementation, as shown in FIG. 4B, the data field of the data frame includes the management identifier of each second optical terminal 03, and the management identifier of each second optical terminal 03 in the data field indicates a location that is of the data processing field corresponding to each second optical terminal 03 and that is in the data field. Each second optical terminal 03 can determine, based on the management identifier of the second optical terminal 03 in the data field, the location that is of the data processing field corresponding to the second optical terminal 03 and that is in the data field. For example, in the data frame shown in FIG. 4C, the management identifiers of the n second optical terminals are IO 1, IO 2, ..., and IO n.

Optionally, the data field of the data frame further includes the management identifier of the first optical terminal 02, and the management identifier of the first optical terminal 02 in the data field indicates a location that is of the data processing field corresponding to the first optical terminal 02 and that is in the data field. The first optical terminal 02 can determine, based on the management identifier of the first optical terminal 02 in the data field, the location that is of the data processing field corresponding to the first optical terminal 02 and that is in the data field. For example, in the data frame shown in FIG. 4C, the management identifier of the first optical terminal is IO 0.

Optionally, the data field of the data frame further includes second indication information of each second optical terminal 03, and the second indication information of each second optical terminal 03 indicates at least one data processing type of the data processing field corresponding to the second optical terminal 03 and a length of a data processing field of each data processing type.

Optionally, the data field of the data frame further includes second indication information of the first optical terminal 02, and second indication information of each first optical terminal 02 indicates at least one data processing type of a data processing field corresponding to the first optical terminal 02 and a length of a data processing field of each data processing type.

Different data processing types correspond to different locations in the data processing field. Optionally, the data processing type includes data processing processes such as read processing, write processing, read/write processing, broadcast write processing, and loopback testing. The read processing means that an optical head end obtains data from an optical terminal via a data frame, that is, the optical terminal writes the data into a data processing field of the data frame. The write processing means that an optical head end writes data into an optical terminal via a data frame, that is, the optical terminal reads the data from a data processing field of the data frame. The broadcast write processing means that an optical head end writes same data into each optical terminal via a data frame, that is, each optical terminal reads the same data from the data frame. The loopback testing means testing connectivity of a link for exchanging data between optical terminals through an electrical port. In actual application, there may be another type of data exchange. This is not limited in this application. In subsequent embodiments, the read processing and the write processing are mainly used as examples for description. For example, in the data frame shown in FIG. 4C, the second indication information may be a command (command, CMD) prompt and length (length, LEN) field (referred to as a CMD&LEN field for short below). The second indication information includes eight bytes, most significant four bytes are a CMD, first two bytes of least significant four bytes are a length of the write processing, and last two bytes are a length of the read processing.

The foregoing describes a main structure and functions of the communication system provided in this application. The following separately describes the devices in the communication system.

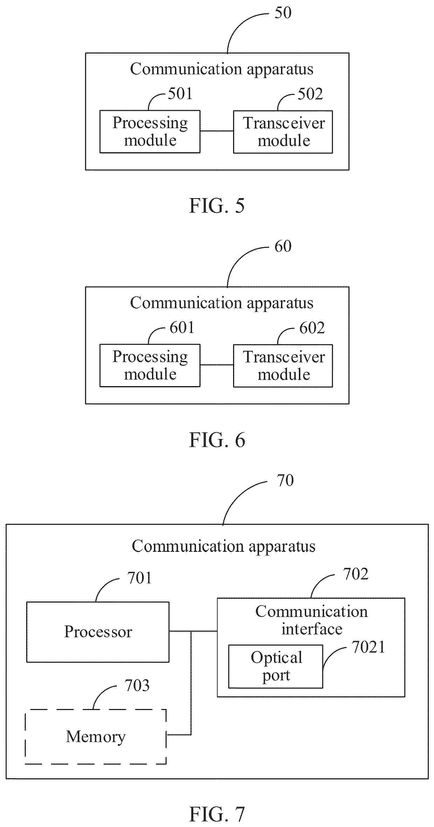

FIG. 5 is a diagram of a structure of a communication apparatus 50 according to an embodiment. The communication apparatus 50 may implement some or all functions of the optical head end 01 described above. When the communication apparatus 50 is used as the optical head end 01, the communication apparatus 50 may be directly inserted into a control device, or the communication apparatus 50 is integrated into a control device. The communication apparatus 50 is used in the communication system shown in FIG. 2A or FIG. 2B. For descriptions of the communication system, refer to the foregoing descriptions corresponding to FIG. 2A or FIG. 2B. Details are not described herein again. The communication apparatus 50 mainly includes a processing module 501 and a transceiver module 502.

The transceiver module 502 is configured to obtain data of at least one of n second optical terminals. The processing module 501 is configured to generate a data frame based on the data of the at least one of the n second optical terminals, where the data frame includes the data of the at least one of the n second optical terminals. The transceiver module 502 is further configured to send the data frame to a first optical terminal.

In a possible implementation, the data frame generated by the communication apparatus 50 includes a data processing field of the first optical terminal and a data processing field of each of the n second optical terminals. The transceiver module 502 is further configured to receive, from the first optical terminal, a data frame after data exchange, where an optical terminal corresponding to at least one data processing field in the data frame after data exchange performs data exchange on the data processing field, and the optical terminal corresponding to the data processing field includes the first optical terminal and/or the second optical terminal.

For descriptions of the data frame, refer to the foregoing related descriptions corresponding to FIG. 4B. Details are not described herein again.

In a possible implementation, the transceiver module 502 is further configured to obtain information about the first optical terminal and information about the n second optical terminals from the first optical terminal. The processing module 501 is further configured to determine a management identifier of the first optical terminal and a management identifier of each of the n second optical terminals based on the information about the first optical terminal and the information about the n second optical terminals. The transceiver module 502 is further configured to send the management identifier of the first optical terminal and the management identifier of each of the n second optical terminals to the first optical terminal. Optionally, information about each second optical terminal includes bandwidth information of the second optical terminal, a physical address of the second optical terminal, and electrical port information of the second optical terminal.

In a possible implementation, the processing module 501 is further configured to generate a management table, where the management table includes the information about the first optical terminal, the information about each second optical terminal, the management identifier of the first optical terminal, the management identifier of each second optical terminal, and third indication information, and the third indication information indicates that the second optical terminal is managed by the first optical terminal.

In a possible implementation, the transceiver module 502 is specifically configured to obtain the data of the at least one second optical terminal from the control device. The processing module 501 is specifically configured to generate the data frame based on the data of the at least one second optical terminal and the management table.

FIG. 6 is a diagram of a structure of a communication apparatus 60 according to an embodiment. The communication apparatus 60 may implement some or all functions of the optical terminal (for example, the first optical terminal 02 or the second optical terminal 03 described above) described above. The communication apparatus 60 is provided with at least one electrical port configured to connect to another optical terminal. When the communication apparatus 60 is used as the optical terminal, the communication apparatus 60 may be directly inserted into a field device, or the communication apparatus 60 is integrated into a field device. The communication apparatus 60 is used in the communication system shown in FIG. 2A or FIG. 2B. For descriptions of the communication system, refer to the foregoing descriptions corresponding to FIG. 2A or FIG. 2B. Details are not described herein again. The communication apparatus 60 mainly includes a processing module 601 and a transceiver module 602.

When the communication apparatus 60 implements some or all functions of the first optical terminal 02, the processing module 601 and the transceiver module 602 in the communication apparatus 60 mainly implement the following functions.

Specifically, the transceiver module 602 is configured to: obtain a data frame from an optical head end through an optical port, where the data frame includes data of at least one of n second optical terminals; and send, through an electrical port, a data frame to a second optical terminal connected to the first optical terminal.

In a possible implementation, the data frame includes a data processing field of the first optical terminal and a data processing field of each of the n second optical terminals. The processing module 601 is configured to perform data exchange based on the data processing field corresponding to the first optical terminal in the data frame. The transceiver module 602 is specifically configured to send, through the electrical port to the second optical terminal connected to the first optical terminal, a data frame after data exchange.

In a possible implementation, the transceiver module 602 is further configured to: receive, from the second optical terminal through the electrical port, a data frame after data exchange; and send, to the optical head end through the optical port, the data frame after data exchange.

In a possible implementation, a frame header of the data frame includes a management identifier of each second optical terminal. The transceiver module 602 is specifically configured to forward, based on a management identifier of the second optical terminal connected to the first optical terminal, a data frame to the second optical terminal in a cut-through manner.

In a possible implementation, a data field of the data frame further includes a management identifier of the first optical terminal, and the management identifier of the first optical terminal in the data field indicates a location that is of the data processing field corresponding to the first optical terminal and that is in the data field. The processing module 601 is specifically configured to determine, based on the management identifier of the first optical terminal in the data field, the location that is of the data processing field corresponding to the first optical terminal and that is in the data field.

In a possible implementation, the transceiver module 602 is further configured to obtain information about the n second optical terminals. The processing module 601 is further configured to register the first optical terminal and the n second optical terminals with the optical head end based on information about the first optical terminal and the information about the n second optical terminals. The transceiver module 602 is further configured to: receive the management identifier of the first optical terminal and the management identifier of each of the n second optical terminals from the optical head end; and broadcast the management identifiers of the n second optical terminals to the n second optical terminals.

When the communication apparatus 60 implements some or all functions of the second optical terminal 03, the processing module 601 and the transceiver module 602 in the communication apparatus 60 mainly implement the following functions.

Specifically, the transceiver module 602 is configured to receive a data frame from a first optical terminal or a previous-level second optical terminal through an electrical port. The processing module 601 is configured to obtain data of the second optical terminal in the data frame. The transceiver module 602 is further configured to send a data frame to a next-level second optical terminal connected to the second optical terminal.

In a possible implementation, the data frame includes a data processing field of the first optical terminal and a data processing field of each of the n second optical terminals. The processing module 601 is specifically configured to perform data exchange based on a data processing field that corresponds to the second optical terminal and that is in the received data frame. The transceiver module 602 is specifically configured to send, to the next-level second optical terminal connected to the second optical terminal, a data frame after data exchange.

In a possible implementation, the transceiver module 602 is further configured to transparently transmit, to the first optical terminal through at least one second optical terminal, a data frame after data exchange.

In a possible implementation, a frame header of the data frame includes a management identifier of each second optical terminal. The transceiver module 602 is specifically configured to forward, based on a management identifier of the next-level second optical terminal connected to the second optical terminal, the data frame to the next-level second optical terminal in a cut-through manner.

Optionally, the frame header of the data frame further includes a management identifier of the first optical terminal.

Optionally, the frame header of the data frame further includes first indication information, and the first indication information indicates the first optical terminal to send a data frame to a second optical terminal connected to the first optical terminal.

In a possible implementation, a data field of the data frame includes the management identifier of each second optical terminal, and the management identifier of each second optical terminal in the data field indicates a location that is of the data processing field corresponding to each second optical terminal and that is in the data field. The processing module 601 is specifically configured to determine, based on a management identifier of the second optical terminal in the data field, a location that is of the data processing field corresponding to the second optical terminal and that is in the data field.

Optionally, the data field of the data frame further includes the management identifier of the first optical terminal, and the management identifier of the first optical terminal in the data field indicates a location that is of the data processing field corresponding to the first optical terminal and that is in the data field.

Optionally, the data field of the data frame further includes second indication information of each second optical terminal, and the second indication information indicates at least one data processing type of the data processing field corresponding to the second optical terminal and a length of a data processing field of each data processing type.

In a possible implementation, the data processing type includes read processing and/or write processing, and different data processing types correspond to different locations in the data processing field. The processing module 601 is specifically configured to write, based on the second indication information, data into a data processing field whose data processing type is read processing; and/or the processing module 601 is specifically configured to read, based on the second indication information, data from a data processing field whose data processing type is write processing.

In a possible implementation, the transceiver module 602 is further configured to obtain the management identifier of the second optical terminal, where the management identifier of the second optical terminal is determined by the optical head end based on information about the n second optical terminals. Optionally, information about each second optical terminal includes bandwidth information of the second optical terminal, a physical address of the second optical terminal, and electrical port information of the second optical terminal.

FIG. 7 is a diagram of a structure of a communication apparatus 70 according to an embodiment. The communication apparatus 70 may be the optical head end 01 described above. It should be understood that the communication apparatus 70 may be directly inserted into a control device, or the communication apparatus 70 is integrated into a control device.

As shown in FIG. 7, the communication apparatus 70 may include a processor 701 and a communication interface 702. The processor 701 is coupled to the communication interface 702.

The processor 701 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 701 may be one processor, or may include a plurality of processors. This is not specifically limited herein. In a possible design, the processor 701 is configured to implement a function of the processing module 501 in the communication apparatus 50 shown in FIG. 5. For details, refer to the foregoing descriptions related to FIG. 5. Details are not described herein again.

In addition, the communication interface 702 is configured to communicate with another device or apparatus. The communication interface 702 includes an optical port 7021. The optical port 7021 is configured to connect to one or more optical terminals (for example, the first optical terminal 02 or the third optical terminal 04 described above) through an optical fiber or an optical distribution network. The optical port 7021 is configured to transmit an optical signal and receive an optical signal. For example, the optical port 7021 may be an optical port in a conventional technology. For example, the optical port 7021 may be any type of optical port like a square connector (square connector, SC) interface, a stab&twist (stab&twist, ST) interface, or a ferrule connector (ferrule connector, FC) interface. Alternatively, the optical port 7021 may be a newly defined optical port. This is not limited in this application.

In addition, the communication interface 702 further includes an electrical port configured to connect to the control device in the conventional technology. When the control device and the communication apparatus 70 are deployed separately, an interface between the control device and the communication apparatus 70 may be any one of an Ethernet interface (for example, an Ethernet interface like an FE interface, a GE interface, or a 10GE interface), a PCIE interface, or another interface. When the communication apparatus 70 and the control device are deployed together, an interface between the communication apparatus 70 and the control device is a software transceiver interface inside a same device.

Optionally, the communication apparatus 70 further includes a memory 703. The processor 701 is coupled to the memory 703. The memory 703 is mainly configured to store a software program and data. The memory 703 may exist independently, and is connected to the processor 701. Optionally, the memory 703 and the processor 701 may be integrated, for example, integrated into one or more chips. The memory 703 can store program code for executing the technical solutions in embodiments of this application, and the processor 701 controls the execution. Various types of executed computer program code may be considered as drivers of the processor 701. The memory 703 may include a volatile memory (volatile memory), for example, a random access memory (random access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 703 may alternatively include a combination of the foregoing types of memories. The memory 703 may be one memory, or may include a plurality of memories. For example, the memory 703 is configured to store various types of data, for example, the information about the first optical terminal 02, the information about the second optical terminal 03, and the management table that are described above.

In an implementation, the memory 703 stores computer-readable instructions, and the computer-readable instructions include a plurality of software modules. The processor 701 invokes the computer-readable instructions to perform a function of a processing module in the optical head end 01. For example, the processor 701 invokes the computer-readable instructions to perform the function of the processing module 501 in the communication apparatus 50 shown in FIG. 5. For details, refer to the foregoing descriptions related to FIG. 5. Details are not described herein again.

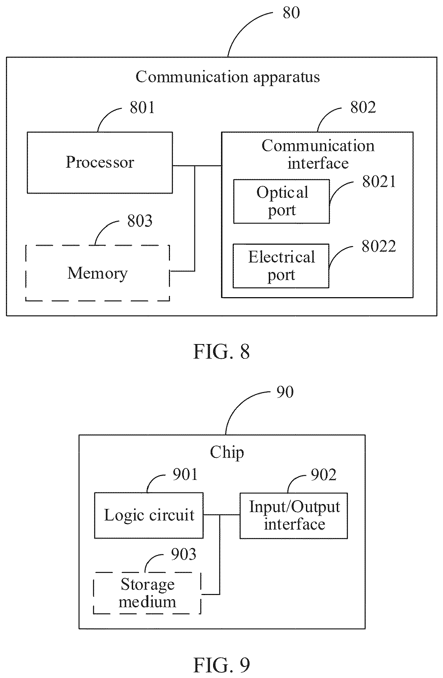

FIG. 8 is a diagram of a structure of a communication apparatus 80 according to an embodiment. The communication apparatus 80 may be the first optical terminal 02 or the second optical terminal 03 described above. It should be understood that the communication apparatus 80 may be directly inserted into a field device, or the communication apparatus 80 is integrated into a field device.

As shown in FIG. 8, the communication apparatus 80 may include a processor 801 and a communication interface 802. The processor 801 is coupled to the communication interface 802.

The processor 801 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 801 may be one processor, or may include a plurality of processors. This is not specifically limited herein. In a possible design, the processor 801 is configured to implement a function of the processing module 601 in the communication apparatus 60 shown in FIG. 6. For details, refer to the foregoing descriptions related to FIG. 6. Details are not described herein again.

In addition, the communication interface 802 is configured to communicate with another device or apparatus. The communication interface 802 includes an optical port 8021. The optical port 8021 is configured to connect to an optical head end (for example, the optical head end 01 described above) through an optical fiber or an optical distribution network. The optical port 8021 is configured to transmit an optical signal and receive an optical signal. For example, the optical port 8021 may be an optical port in a conventional technology. For example, the optical port 8021 may be any type of optical port like a square connector (square connector, SC) interface, a stab&twist (stab&twist, ST) interface, or a ferrule connector (ferrule connector, FC) interface. Alternatively, the optical port 8021 may be a newly defined optical port. This is not limited in this application. The communication interface 802 further includes an electrical port 8022. The electrical port 8022 is configured to connect to another optical terminal, so that the communication apparatus 80 can transmit an electrical signal to the another optical terminal through the electrical port 8022. For example, the electrical port 8022 may be a twisted pair interface, for example, an RJ45 interface. This is not limited in this application.

In addition, the communication interface 802 further includes an electrical port configured to connect to the field device in the conventional technology. When the communication apparatus 80 and the field device are deployed separately, an interface between the communication apparatus 80 and the field device may be any one of an Ethernet interface (for example, FE, GE, or 10GE), a serial peripheral interface (serial peripheral interface, SPI), a servo motor monitoring and driving interface (for example, an AD, a general-purpose input/output (general-purpose input/output, GPIO), an RS422, or a pulse width modulation (pulse width modulation, PWM) control interface), a parallel interface, an inter-integrated circuit (inter-integrated circuit, I2C) bus interface, or another interface. When the communication apparatus 80 and the field device are deployed together, an interface between the communication apparatus 80 and the field device is a software transceiver interface inside a same device.

Optionally, the communication apparatus 80 further includes a memory 803. The processor 801 is coupled to the memory 803. The memory 803 is mainly configured to store a software program and data. The memory 803 may exist independently, and is connected to the processor 801. Optionally, the memory 803 and the processor 801 may be integrated, for example, integrated into one or more chips. The memory 803 can store program code for executing the technical solutions in embodiments of this application, and the processor 801 controls the execution. Various types of executed computer program code may be considered as drivers of the processor 801. The memory 803 may include a volatile memory (volatile memory), for example, a random access memory (random access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 803 may alternatively include a combination of the foregoing types of memories. The memory 803 may be one memory, or may include a plurality of memories. For example, the memory 803 is configured to store various types of data, for example, the information about the first optical terminal 02 and the information about the second optical terminal 03 that are described above.

In an implementation, the memory 803 stores computer-readable instructions, and the computer-readable instructions include a plurality of software modules. The processor 801 invokes the computer-readable instructions to perform a function of a processing module in the optical head end 01. For example, the processor 801 invokes the computer-readable instructions to perform the function of the processing module 601 in the communication apparatus 60 shown in FIG. 6. For details, refer to the foregoing descriptions related to FIG. 6. Details are not described herein again.

FIG. 9 is a diagram of a structure of a chip 90 according to an embodiment. The chip 90 includes at least one logic circuit 901 and an input/output interface 902. The input/output interface 902 is configured to input a to-be-processed electrical signal and a processed electrical signal. For example, the chip may be a system on chip (system on chip, SoC). This is not specifically limited herein.

In an implementation, the logic circuit 901 is configured to perform some or all functions of the optical head end 01 shown in FIG. 2A. In another implementation, the logic circuit 901 is configured to perform some or all functions of the first optical terminal 02 shown in FIG. 2A. In another implementation, the logic circuit 901 is configured to perform some or all functions of the second optical terminal 03 shown in FIG. 2A.

Optionally, the chip 90 further includes a storage medium 903. The storage medium 903 is configured to store computer-readable instructions, to enable the chip 90 to perform some or all functions of the communication apparatus 50 shown in FIG. 5, or enable the chip 90 to perform some or all functions of the communication apparatus 60 shown in FIG. 6.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the spirit and the scope of the technical solutions of embodiments of this application.

## Claims

1. A communication system, comprising:
an optical head end, a first optical terminal, and n second optical terminals managed by the first optical terminal, wherein the first optical terminal is connected to the optical head end through an optical port, the n second optical terminals are connected in series through electrical ports, the first optical terminal is connected, through an electrical port, to the n second optical terminals connected in series, and n is an integer greater than 0, wherein
the optical head end is configured to send a data frame to the first optical terminal, wherein the data frame comprises data of at least one of the n second optical terminals;
the first optical terminal is configured to: obtain the data frame through the optical port, and send, through the electrical port, a data frame to a second optical terminal connected to the first optical terminal; and
each of the at least one second optical terminal is configured to: receive a data frame from the first optical terminal or a previous-level second optical terminal through an electrical port, obtain data of the second optical terminal in the data frame, and send a data frame to a next-level second optical terminal connected to the second optical terminal.

2. The communication system according to claim 1, wherein the data frame comprises a data processing field of the first optical terminal and a data processing field of each of the n second optical terminals;
the first optical terminal is further configured to perform data exchange based on the data processing field corresponding to the first optical terminal in the data frame; and
each of the n second optical terminals is specifically configured to perform data exchange based on the data processing field corresponding to the second optical terminal in a received data frame.

3. The communication system according to claim 2, wherein
the second optical terminal is further configured to transparently transmit, to the first optical terminal through at least one second optical terminal, a data frame after data exchange; and
the first optical terminal is further configured to send, to the optical head end through the optical port, the data frame after data exchange.

4. The communication system according to any one of claims 1 to 3, wherein a frame header of the data frame comprises a management identifier of each second optical terminal;
the first optical terminal is specifically configured to send, based on a management identifier of the second optical terminal connected to the first optical terminal, a data frame to the second optical terminal in a cut-through manner; and
each of the n second optical terminals is specifically configured to send, based on a management identifier of a next-level second optical terminal connected to the second optical terminal, a data frame to the next-level second optical terminal in a cut-through manner.

5. The communication system according to claim 4, wherein the frame header of the data frame further comprises a management identifier of the first optical terminal.

6. The communication system according to claim 4 or 5, wherein the frame header of the data frame further comprises first indication information, and the first indication information indicates the first optical terminal to send a data frame to the second optical terminal connected to the first optical terminal.

7. The communication system according to any one of claims 2 to 6, wherein a data field of the data frame comprises the management identifier of each second optical terminal, and the management identifier of each second optical terminal in the data field indicates a location that is of the data processing field corresponding to each second optical terminal and that is in the data field; and
each of the n second optical terminals is specifically configured to determine, based on the management identifier of the second optical terminal in the data field, the location that is of the data processing field corresponding to the second optical terminal and that is in the data field.

8. The communication system according to claim 7, wherein the data field of the data frame further comprises the management identifier of the first optical terminal, and the management identifier of the first optical terminal in the data field indicates a location that is of the data processing field corresponding to the first optical terminal and that is in the data field; and
the first optical terminal is specifically configured to determine, based on the management identifier of the first optical terminal in the data field, the location that is of the data processing field corresponding to the first optical terminal and that is in the data field.

9. The communication system according to claim 7 or 8, wherein the data field of the data frame further comprises second indication information of each second optical terminal, and the second indication information indicates at least one data processing type of the data processing field corresponding to the second optical terminal and a length of a data processing field of each data processing type.

10. The communication system according to claim 9, wherein the data processing type comprises read processing and/or write processing, and different data processing types correspond to different locations in the data processing field; and
the second optical terminal is specifically configured to write, based on the second indication information, data into a data processing field whose data processing type is read processing; and/or
the second optical terminal is specifically configured to read, based on the second indication information, data from a data processing field whose data processing type is write processing.

11. The communication system according to any one of claims 1 to 10, wherein
the first optical terminal is further configured to: obtain information about the n second optical terminals, and register the first optical terminal and the n second optical terminals with the optical head end based on information about the first optical terminal and the information about the n second optical terminals; and
the optical head end is further configured to determine the management identifier of the first optical terminal and the management identifier of each of the n second optical terminals based on the information about the first optical terminal and the information about the n second optical terminals that are obtained from the first optical terminal.

12. The communication system according to claim 11, wherein
the optical head end is further configured to send the management identifier of the first optical terminal and the management identifier of each of the n second optical terminals to the first optical terminal; and
the first optical terminal is further configured to broadcast the management identifiers of the n second optical terminals to the n second optical terminals.

13. The communication system according to claim 11 or 12, wherein information about each second optical terminal comprises bandwidth information of the second optical terminal, a physical address of the second optical terminal, and electrical port information of the second optical terminal.

14. The communication system according to any one of claims 11 to 13, wherein
the optical head end is further configured to generate a management table, wherein the management table comprises the information about the first optical terminal, the information about each second optical terminal, the management identifier of the first optical terminal, the management identifier of each second optical terminal, and third indication information, and the third indication information indicates that the second optical terminal is managed by the first optical terminal.

15. The communication system according to claim 14, wherein the communication system further comprises a control device and field devices, the control device is connected to the optical head end, the first optical terminal is connected to at least one field device, and each second optical terminal is connected to at least one field device;
the optical head end is further configured to: obtain the data of the at least one second optical terminal from the control device, and generate the data frame based on the data of the at least one second optical terminal and the management table;
the first optical terminal is further configured to perform data exchange with the at least one field device connected to the first optical terminal; and
the second optical terminal is further configured to perform data exchange with the at least one field device connected to the second optical terminal.

16. The communication system according to claim 15, wherein the optical head end is connected to the optical port of the first optical terminal via an optical distribution network, the communication system further comprises a third optical terminal, the optical head end is connected to an optical port of the third optical terminal via the optical distribution network, and the third optical terminal is connected to at least one field device.

17. An optical head end, wherein the optical head end is used in a communication system, the communication system comprises the optical head end, a first optical terminal, and n second optical terminals managed by the first optical terminal, the first optical terminal is connected to the optical head end through an optical port, the n second optical terminals are connected in series through electrical ports, the first optical terminal is connected, through an electrical port, to the n second optical terminals connected in series, n is an integer greater than 0, and the optical head end comprises:
a transceiver module, configured to obtain data of at least one of the n second optical terminals; and
a processing module, configured to generate a data frame based on the data of the at least one of the n second optical terminals, wherein the data frame comprises the data of the at least one of the n second optical terminals, wherein
the transceiver module is further configured to send the data frame to the first optical terminal.

18. The optical head end according to claim 17, wherein the data frame comprises a data processing field of the first optical terminal and a data processing field of each of the n second optical terminals; and
the transceiver module is further configured to receive, from the first optical terminal, a data frame after data exchange, wherein an optical terminal corresponding to at least one data processing field in the data frame after data exchange performs data exchange on the data processing field, and the optical terminal corresponding to the data processing field comprises the first optical terminal and/or the second optical terminal.

19. The optical head end according to claim 17 or 18, wherein
the transceiver module is further configured to obtain information about the first optical terminal and information about the n second optical terminals from the first optical terminal;
the processing module is further configured to determine a management identifier of the first optical terminal and a management identifier of each of the n second optical terminals based on the information about the first optical terminal and the information about the n second optical terminals; and
the transceiver module is further configured to send the management identifier of the first optical terminal and the management identifier of each of the n second optical terminals to the first optical terminal.

20. The optical head end according to claim 19, wherein information about each second optical terminal comprises bandwidth information of the second optical terminal, a physical address of the second optical terminal, and electrical port information of the second optical terminal.

21. The optical head end according to claim 19 or 20, wherein the processing module is further configured to generate a management table, wherein the management table comprises the information about the first optical terminal, the information about each second optical terminal, the management identifier of the first optical terminal, the management identifier of each second optical terminal, and third indication information, and the third indication information indicates that the second optical terminal is managed by the first optical terminal.

22. The optical head end according to claim 21, wherein the communication system further comprises a control device and field devices, the control device is connected to the optical head end, the first optical terminal is connected to at least one field device, and each second optical terminal is connected to at least one field device;
the transceiver module is specifically configured to obtain the data of the at least one second optical terminal from the control device; and
the processing module is specifically configured to generate the data frame based on the data of the at least one second optical terminal and the management table.

23. A first optical terminal, wherein the first optical terminal is used in a communication system, the communication system comprises an optical head end, the first optical terminal, and n second optical terminals managed by the first optical terminal, the first optical terminal is connected to the optical head end through an optical port, the n second optical terminals are connected in series through electrical ports, the first optical terminal is connected, through an electrical port, to the n second optical terminals connected in series, n is an integer greater than 0, and the first optical terminal comprises:
a transceiver module, configured to obtain a data frame from the optical head end through the optical port, wherein the data frame comprises data of at least one of the n second optical terminals, wherein
the transceiver module is further configured to send, through the electrical port, a data frame to a second optical terminal connected to the first optical terminal.

24. The first optical terminal according to claim 23, wherein the data frame comprises a data processing field of the first optical terminal and a data processing field of each of the n second optical terminals;
the first optical terminal further comprises a processing module;
the processing module is configured to perform data exchange based on the data processing field corresponding to the first optical terminal in the data frame; and
the transceiver module is specifically configured to send, through the electrical port to the second optical terminal connected to the first optical terminal, a data frame after data exchange.

25. The first optical terminal according to claim 23 or 24, wherein the transceiver module is further configured to:
receive, from the second optical terminal through the electrical port, a data frame after data exchange; and
send, to the optical head end through the optical port, the data frame after data exchange.

26. The first optical terminal according to any one of claims 23 to 25, wherein a frame header of the data frame comprises a management identifier of each second optical terminal; and
the transceiver module is specifically configured to forward, based on a management identifier of the second optical terminal connected to the first optical terminal, a data frame to the second optical terminal in a cut-through manner.

27. The first optical terminal according to claim 25 or 26, wherein the frame header of the data frame further comprises first indication information, and the first indication information indicates the first optical terminal to send a data frame to the second optical terminal connected to the first optical terminal.

28. The first optical terminal according to any one of claims 24 to 27, wherein a data field of the data frame comprises the management identifier of each second optical terminal, and the management identifier of each second optical terminal in the data field indicates a location that is of the data processing field corresponding to each second optical terminal and that is in the data field.

29. The first optical terminal according to claim 28, wherein the data field of the data frame further comprises a management identifier of the first optical terminal, and the management identifier of the first optical terminal in the data field indicates a location that is of the data processing field corresponding to the first optical terminal and that is in the data field; and
the processing module is specifically configured to determine, based on the management identifier of the first optical terminal in the data field, the location that is of the data processing field corresponding to the first optical terminal and that is in the data field.

30. The first optical terminal according to claim 28 or 29, wherein the data field of the data frame further comprises second indication information of each second optical terminal, and the second indication information indicates at least one data processing type of the data processing field corresponding to the second optical terminal and a length of a data processing field of each data processing type.

31. The first optical terminal according to any one of claims 23 to 30, wherein
the transceiver module is further configured to obtain information about the n second optical terminals;
the processing module is further configured to register the first optical terminal and the n second optical terminals with the optical head end based on information about the first optical terminal and the information about the n second optical terminals; and
the transceiver module is further configured to: receive the management identifier of the first optical terminal and the management identifier of each of the n second optical terminals from the optical head end; and broadcast the management identifiers of the n second optical terminals to the n second optical terminals.

32. The first optical terminal according to claim 31, wherein information about each second optical terminal comprises bandwidth information of the second optical terminal, a physical address of the second optical terminal, and electrical port information of the second optical terminal.

33. A second optical terminal, wherein the second optical terminal is used in a communication system, the communication system comprises an optical head end, a first optical terminal, and n second optical terminals managed by the first optical terminal, the first optical terminal is connected to the optical head end through an optical port, the n second optical terminals are connected in series through electrical ports, the first optical terminal is connected, through an electrical port, to the n second optical terminals connected in series, n is an integer greater than 0, and the second optical terminal comprises:
a transceiver module, configured to receive a data frame from the first optical terminal or a previous-level second optical terminal through an electrical port; and
a processing module, configured to obtain data of the second optical terminal in the data frame, wherein
the transceiver module is further configured to send a data frame to a next-level second optical terminal connected to the second optical terminal.

34. The second optical terminal according to claim 33, wherein the data frame comprises a data processing field of the first optical terminal and a data processing field of each of the n second optical terminals;
the processing module is specifically configured to perform data exchange based on a data processing field that corresponds to the second optical terminal and that is in the received data frame; and
the transceiver module is specifically configured to send, to the next-level second optical terminal connected to the second optical terminal, a data frame after data exchange.

35. The second optical terminal according to claim 34, wherein
the transceiver module is further configured to transparently transmit, to the first optical terminal through at least one second optical terminal, a data frame after data exchange.

36. The second optical terminal according to any one of claims 33 to 35, wherein a frame header of the data frame comprises a management identifier of each second optical terminal; and
the transceiver module is specifically configured to forward, based on a management identifier of the next-level second optical terminal connected to the second optical terminal, the data frame to the next-level second optical terminal in a cut-through manner.

37. The second optical terminal according to claim 35 or 36, wherein the frame header of the data frame further comprises first indication information, and the first indication information indicates the first optical terminal to send a data frame to a second optical terminal connected to the first optical terminal.

38. The second optical terminal according to any one of claims 34 to 37, wherein a data field of the data frame comprises the management identifier of each second optical terminal, and the management identifier of each second optical terminal in the data field indicates a location that is of the data processing field corresponding to each second optical terminal and that is in the data field; and
the processing module is specifically configured to determine, based on a management identifier of the second optical terminal in the data field, a location that is of the data processing field corresponding to the second optical terminal and that is in the data field.

39. The second optical terminal according to claim 38, wherein the data field of the data frame further comprises a management identifier of the first optical terminal, and the management identifier of the first optical terminal in the data field indicates a location that is of the data processing field corresponding to the first optical terminal and that is in the data field.

40. The second optical terminal according to claim 38 or 39, wherein the data field of the data frame further comprises second indication information of each second optical terminal, and the second indication information indicates at least one data processing type of the data processing field corresponding to the second optical terminal and a length of a data processing field of each data processing type.

41. A communication apparatus, comprising a processing module, wherein the processing module is configured to implement a function of the optical head end according to any one of claims 17 to 22.

42. A communication apparatus, comprising a processing module, wherein the processing module is configured to implement a function of the first optical terminal according to any one of claims 23 to 32, or implement a function of the second optical terminal according to any one of claims 33 to 40.
